# EUROPEAN PATENT SPECIFICATION

(11) **EP 0 649 047 B1**
(45) Date of publication and mention of the grant of the patent: **05.11.2003**
(21) Application number: 94910563.9
(22) Date of filing: 29.03.1994
(51) Int. Cl.: G02F 1/1333

(54) **PLASTIC OPTICAL ARTICLE AND PROCESS FOR PRODUCING THE SAME**
OPTISCHER KUNSTSTOFF-FORMKÖRPER UND VERFAHREN ZU DESSEN HERSTELLUNG
ARTICLE OPTIQUE EN PLASTIQUE ET SON PROCEDE DE PRODUCTION

(30) Priority: 29.03.1993 JP 6987193; 28.07.1993 JP 18609293
(43) Date of publication of application: 19.04.1995
(73) Proprietor: TORAY INDUSTRIES, INC., Tokyo 103-8666 (JP)
(72) Inventor: MAEKAWA, Masaki, Takatsuki-shi, Osaka 569 (JP); SHIMOYAMA, Naoki, Otsu-shi, Shiga 520 (JP); WATASE, Takanori, Otsu-shi, Shiga 520 (JP); ADACHI, Shinya, Otsu-shi, Shiga 520 (JP)
(74) Representative: Coleiro, Raymond
(86) International application number: JP9400512
(87) International publication number: WO94023332

(56) References cited:
- EP-A- 0 499 492
- JP-A- 60 069 630
- JP-A- 60 260 019
- JP-A- 61 015 128
- JP-A- 61 018 925
- JP-A- 61 041 122
- JP-A- 61 073 924
- JP-A- 61 116 332
- PATENT ABSTRACTS OF JAPAN vol. 17, no. 231 (P-1532), 11 May 1993 & JP-A-04 359223 (RICOH CO LTD), 11 December 1992,
- PATENT ABSTRACTS OF JAPAN vol. 10, no. 237 (P-487), 15 August 1986 & JP-A-61 069028 (SHARP CORP.), 9 April 1986,
- DATABASE WPI Derwent Publications Ltd., London, GB; AN 90-295078 XP002019972 & JP-A-02 208 627 (TEIJIN KK.) , 20 August 1990

## Description

### Technical Field

The present invention relates to plastic optical articles with excellent gas barrier properties, conductivity, durability, heat resistance, abrasion resistance, transparency and chemical resistance.

### Background Art

Plastic materials in general are light-weight and have excellent impact resistance, processability and mass-producibility, and thus in recent years they have been in great demand as materials for optical devices such as optical filters, optical lenses and optical disks. At present, transparent resins such as polymethylmethacrylate, polystyrene and polycarbonate are mainly used as the plastic materials for these optical devices.

Research is being conducted to impart conductivity to these plastic moldings for their increased functions. Common methods for forming conductive films on moldings are physical methods of forming metal oxides such as indium/tin oxide (hereunder, ITO) and SnO₂, or metals such as Au and Ag by vacuum deposition or sputtering. Plastic molds with conductive films obtained by these methods may be used as materials for electronic circuit components such as resistors; duplicating materials for electrophctographs and electrophotographic recording; transparent electrodes for electrochromic displays, electroluminescent displays and signal input for touch panels; photoelectric conversion elements such as solar cells and light amplifiers; as well as for anti-static effects, electromagnetic wave blocking, heating elements, sensors, and the like. In particular, since such plastics may be made thinner and lighter in weight, are more pliable and resistant to cracking, and have more excellent workability than glass substrates, they are viewed with much promise as electrooptical elements for liquid crystal displays. EP-A-0 499 492 proposes plastic optical articles which comprise a transparent resin substrate.

However, when plastic transparent resins are used as substrates in liquid crystal displays, in comparison to glass substrates their heat resistance and strength of adhesion to the conductive films are low while their air permeability and moisture permeability are high, leading to problems such as deterioration of the liquid crystal substance due to permeation of oxygen, and increased power consumption of the display device due to permeation of moisture, and consequently their effect on the life-span and reliability of liquid crystal displays has been considerable. As one publicly known example of improvement of these problems there may be mentioned the method described in Japanese Unexamined Patent Publication No. 61-79644, wherein a film comprising a polyvinyl alcohol resin, which has superior gas barrier properties, is formed on a transparent resin, and a conductive layer is formed thereon. However, since polyvinyl alcohol resins are hydrophilic, when they absorb large amounts of water the hydrogen bonds between the molecules, which are the basis of the high gas barrier effect, are broken by the water molecules, thus greatly reducing the gas barrier properties. In addition, during etching of the conductive layer, the latter reacts with hydrochloric acid which is used as the etching fluid, thus causing deterioration of the film, and therefore polyvinyl alcohol resins cannot be used alone. As a result, as described in Japanese Unexamined Patent Publication No. 61-79644, there is required a laminar construction prepared by constructing a metal oxide film which has resistance to deterioration under high humidity, resistance to hydrochloric acid and excellent gas barrier properties, on a transparent resin substrate, and forming the conductive layer thereon.

However, since such films comprising polyvinyl alcohol resins have a large difference in the linear expansion coefficients of the metal oxide film and transparent conductive layer formed on the film, during heat treatment and moisture absorption they are very prone to cracks in the metal oxide film and/or transparent conductive layer. Furthermore, in the construction mentioned above the metal oxide layer is formed directly on the transparent resin substrate, and thus the difference in the linear expansion coefficients of the substrate and metal oxide film is large, thus rendering the metal oxide film very prone to cracking during heat treatment.

An arm of the present invention is to overcome the problems described above by providing plastic optical articles with excellent gas barrier properties, conductivity, durability, heat resistance, abrasion resistance, transparency and chemical resistance.

Accordingly in one aspect the present invention provides a plastic optical article having at least the layers A, B, F and D, in which each layer comprise one or more layers respectively.
A. A transparent resin
B. The following gas barrier layer B1 or B2:
   B1. A cured gas barrier layer composed mainly of a hydrophilic resin and an organosilicon compound.
   B2. A cured gas barrier layer composed mainly of a polymer with an oxygen permeability coefficient of 1 × 10⁻¹³ [cm³·cm/cm²·sec·Pa] or less, and a water vapor permeability coefficient of 1 × 10⁻¹⁰ [cm³·cm/cm²·sec·Pa] or less.
F. The following inorganic layers C and/or E
C. A transparent electro-conductive layer
E. A metal oxide and/or metal nitride layer
D. A cured layer containing inorganic fine particles.

Layer A (transparent resin layer) according to the present invention is mainly composed of a transparent resin as described below.

### Best Mode for Carrying Out the Invention

There are no particular restrictions on the transparent resin of the present invention, but transparent resins with glass transition temperatures of 130°C or higher are preferably used, and those with glass transition temperatures of 160°C or higher having even better heat resistance are even more preferred. The glass transition temperature is the temperature at which the polymer changes from a non-crystalline glass-like state to a rubber-like state, and its properties including the elastic modulus, expansion coefficient, heat content, refractive index and dielectric constant vary within that transition range. Measurement of the glass transition temperature is possible based on the changes in these properties, and specifically it may be evaluated by a publicly known method (for example JIS K7121) using differential scanning calorimetry (DSC).

Regarding the mechanical properties of the transparent resin, when expressed as the flexural modulus at room temperature it is preferably 200 kg/mm² and more preferably 330 kg/mm² or greater. Also, the transparency of the transparent resin, when expressed as the total light transmittance when no coloring occurs, is preferably 60% or greater, and more preferably 80% or greater. The transparent resin may be in a hybrid system with an inorganic substance or the like so long as its transparency is not impaired, and it may also contain an inorganic bond such as a siloxane or phosphazene bond.

As components of transparent resins with a glass transition temperature of 130°C or higher there may be mentioned (i) polyolefinic resins represented by polymethacrylic resins such as polymethacrylic acid, polycarboxyphenyl methacrylamide, etc. and polystyrenic resins such as poly(biphenyl)styrene; (ii) polyether resins represented by poly(2,6-dimethyl-1,4-phenyleneoxide); (iii) polycarbonate resins represented by poly(oxycarbonyloxy-1,4-phenyleneisopropylidene-1,4-phenylene); (iv) polyester resins represented by poly(oxy-2,2,4,4-tetramethyl-1,3-cyclobutyleneoxyterephthaloyl); (v) polysulfonic resins represented by poly(oxy-1,4-phenylenesulfonyl-1,4-phenylene), poly(oxy-1,4-phenyleneisopropylidene-1,4-phenyleneoxy-1,4-phenylenesulfonyl-1,4-phenylene), etc.; (vi) polyamide resins represented by poly(iminoisophthaloylimino-4,4'-biphenylene); (vii) polysulfide resins represented by poly(thio-1,4-phenylenesulfonyl-1,4-phenylene); (viii) unsaturated polyester resins; (ix) epoxy resins; (x) melamine resins; (xi) phenolic resins; (xii) diallylphthalate resins; (xiii) polyimide resins and (xiv) polyphosphazene resins.

In addition, a crosslinked structure may be introduced into these polymers to obtain a transparent crosslinked resin with the above-mentioned thermal properties. Polyolefin resins are particularly preferred from the point of view of transparency and moldability, and polyolefin copolymers resulting from polymerization of compositions containing polyfunctional monomers with 2 or more unsaturated groups are even more preferred.

Of the above-mentioned copolymers there is preferably used a copolymer resulting from polymerization of a composition containing 20-98 wt% of a monomer represented by general formula (F) below and 2-80 wt% of a polyfunctional monomer with 2 or more unsaturated groups, and wherein the total weight proportion of the monomer represented by general formula (F) and the polyfunctional monomer with 2 or more unsaturated groups is 30 wt% or more. 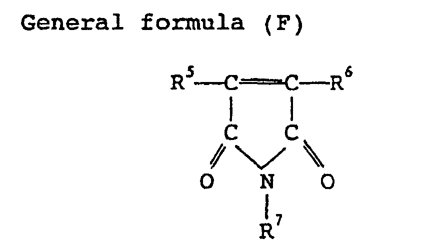 where R⁵ and R⁶ are substituents selected from hydrogen, methyl and ethyl, and R⁷ is a substituent selected from hydrogen and hydrocarbon groups of 1-20 carbon atoms.

R⁵ and R⁶ may be identical or different. When R⁷ is a hydrocarbon group, they may be specifically, (i) linear alkyl groups such as methyl, ethyl, propyl, octyl and octadecyl, (ii) branched alkyl groups such as isopropyl, sec-butyl, tert-butyl and isopentyl, (iii) alicyclic hydrocarbon groups such as cyclohexyl and methylcyclohexyl, (iv) aryl groups such as phenyl and methylphenyl, and (v) aralkyl groups such as benzyl and phenethyl.

Furthermore, R⁵, R⁶ and R⁷ may be substituted with a variety of substituents including halogens such as fluorine, chlorine and bromine, and cyano, carboxyl, sulfonic, nitro, hydroxy and alkoxy groups.

Concrete examples of compounds represented by general formula (F) are N-methylmaleimide, N-butylmaleimide, N-phenylmaleimide, N-o-methylphenylmaleimide, N-m-methylphenylmaleimide, N-p-methylphenylmaleimide, N-o-hydroxyphenylmaleimide, N-m-hydroxyphenylmaleimide, N-p-hydroxyphenylmaleimide, N-methoxyphenylmaleimide, N-m-methoxyphenylmaleimide, N-p-methoxyphenylmaleimide, N-o-chlorophenylmaleimide, N-m-chlorophenylmaleimide, N-p-chlorophenylmaleimide, N-o-carboxyphenylmaleimide, N-p-carboxyphenylmaleimide, N-p-nitrophenylmaleimide, N-ethylmaleimide, N-cyclohexylmaleimide and N-isopropylmaleimide.

These monomers may be used alone or with 2 or more thereof in admixture. Furthermore, from the standpoint of yellowing after heat resistance testing and weatherability, of the maleimide compounds mentioned above there are particularly preferred alkylmaleimides and cycloalkylmaleimides, with N-iso-propylmaleimide and N-cyciohexylmaleimide being especially preferred. In addition, from the standpoint of ease of preparation of the monomer solution and satisfactory properties during cast polymerization, an N-alkylmaleimide such as N-iso-propylmaleimide and an N-alicyclic alkylmaleimide such as N-cyclohexylmaleimide are most preferably used in combination. When used together, the proportion of the N-alkylmaleimide and N-alicyclic alkylmaleimide will depend on the types and amounts of the polyfunctional monomers with 2 or more unsaturated groups, and this must be determined by appropriate experimentation, but in order to exhibit the effect of the combination, they are preferably used in the range of 10 to 500 parts by weight of the N-alicyclic maleimide to 100 parts by weight of the N-alkylmaleimide.

The polyfunctional monomer with 2 or more unsaturated groups is a monomer with 2 or more unsaturated functional groups copolymerizable with the above-mentioned maleides, examples of such copolymerizable functional groups being vinyl, methylvinyl, acrylic and methacrylic groups. Also, monomers containing 2 or more different copolymerizable functional groups in the same molecule are included by the term "polyfunctional monomer" according to the present invention.

As preferred concrete examples of the above-mentioned polyfunctional monomer with 2 or more unsaturated groups there may be mentioned (i) di-, tri- and tetra-(meth)acrylates of polyhydric alcohols, such as ethyleneglycol di(meth)acrylate, diethyleneglycol di(meth)acrylate, triethyleneglycol di(meth)acrylate, glycerol (di/tri)(meth)acrylate, trimethylolpropane (di/tri)(meth)acrylate, and pentaerythritol (di/tri/tetra)(meth)acrylate; (ii) aromatic polyfunctional monomers such as p-divinylbenzene and o-divinylbenzene; (iii) esters such as vinyl acrylate ester and allyl (meth)acrylate ester; (iv) dienes such as butadiene, hexadiene and pentadiene; (v) monomers with a phosphazene skeleton polymerized with dichlorophosphazene as the starting material and having a polyfunctional group introduced therein; and (vi) polyfunctional monomers with a heterocyclic skeleton such as triallylisocyanurate.

The above-mentioned polyolefinic copolymer composition preferably contains 20-98 wt% of the monomer represented by general formula (F). At less than 20 wt%, the properties of heat resistance, mechanical strength, optical isotropy, etc. are sometimes not satisfactory, and at greater than 98 wt% the degree of crosslinking is reduced, sometimes rendering the solvent resistance and water absorption coefficient unsatisfactorily low. A proportion of 30-80 wt% is more preferable, and a proportion of 40-60 wt% is even more preferable.

The polyfunctional monomer with 2 or more unsaturated groups is preferably contained in the crosslinked polymer composition in a proportion of 2-80 wt%. At less than 2 wt%, crosslinking will not proceed sufficiently, tending to lower the heat resistance and solvent resistance. Also, at greater than 80 wt% the impact resistance is lowered, sometimes so much as to significantly lower the properties of the material as a plastic.

Preferably, various copolymerizable monomers are used in combination in the polyolefinic copolymer composition described above, for improvement of the mechanical strength, optical isotropy, high refractive index, low water absorption, dyeability, heat resistance, impact resistance, etc. Examples of such monomers that can be conjointly used include aromatic vinyl monomers, olefinic vinyl monomers, (meth)acrylic monomers and their ester monomers, polyvalent carboxylic anhydrides, etc. Specific examples of aromatic vinyl monomers include styrene, α-methylstyrene, p-methylstyrene, p-tert-butylstyrene, vinyltoluene, chlorostyrene and bromostyrene. Styrene, α-methylstyrene and p-methylstyrene are generally used for their suitable properties and because they are readily available industrially. Other concrete examples of preferred vinyl monomers include (i) vinyl cyanide monomers such as acrylonitrile and methacrylonitrile, (ii) (meth)acrylate (ester) type monomer such as methyl methacrylate, methyl acrylate, cyclohexyl methacrylate, t-butyl methacrylate, benzyl methacrylate, acrylic acid and methacrylic acid, and (iii) maleic anhydride.

The total content of the monomer represented by the general formula (A) and the polyfunctional monomer with 2 or more unsaturated groups in the polyolefinic copolymer composition described above is preferably at least 30 wt% in the crosslinked resin composition, and more preferably is at least 40 wt%. If less than 30 wt%, the polymer will sometimes have inadequate transparency, heat resistance, chemical resistance and impact resistance.

The addition of various UV-absorbers, antioxidants and antistatic agents to the transparent resin of the present invention is useful for improving the light resistance, oxidation degradation properties and antistatic properties. It is particularly preferred to copolymerize a monomer having UV absorbing properties or antioxidating properties because these properties can be improved without lowering the chemical resistance and heat resistance. Preferred examples of such monomers are benzophenone type UV absorbers having an unsaturated double bond, phenyl benzoate type UV absorbers having an unsaturated double bond and (meth)acrylic monomers having a hindered amino group as a substituent. These monomers for copolymerization are preferably used in the range of 0.5-20 wt%. If the content is less than 0.5 wt%, the effect of the addition cannot be recognized, and if more than 20 wt%, the heat resistance and mechanical strength tend to be lowered.

The method of polymerizing the transparent resin is not particularly limited, and the polymerization may usually be carried out by publicly known methods. If the transparent resin is a polyolefinic copolymer, the polymerization may be carried out by keeping the mixture of the monomers described above at a predetermined temperature in the presence or absence of a radical initiator. Any polymerization method, such as bulk polymerization, solution polymerization, suspension polymerization or casting polymerization may be employed. The degree of polymerization of the transparent crosslinked resin of the present invention is not particularly limited but a higher polymerization degree is preferred, and considering post-processing of the transparent film, such as solution coating and vacuum deposition, the degree of polymerization is preferably at least 90%. The polymerization of the transparent resin of the present invention may be carried out at a temperature of from 30 to 250°C, and the rate of polymerization may be increased at a polymerization temperature of not lower than 130°C, and preferably not lower than 150°C.

There are no particular limitations to the molding method of the transparent resin of the present invention, and extrusion molding, injection molding, solvent molding and casting polymerization may be employed. Casting polymerization is considered an effective molding method. Furthermore, considering the mechanical characteristics, the thickness of the substrate comprising the transparent resin is preferably 0.1-10 mm, and more preferably 0.1-0.8 mm.

Layer B (cured layer composed mainly of a hydrophilic resin and an organosilicon compound) according to the present invention is a layer comprising, in addition to a hydrophilic resin, an organosilicon compound represented by general formula (A) (or a hydrolysate thereof) and an aluminum chelate compound represented by general formula (B).

General formula (A) R¹ ₐR² _{b}SiX_{4-a-b}

where R¹ is an organic group of 1-10 carbon atoms, R² is a hydrocarbon or halogenated hydrocarbon group of 1-6 carbon atoms, X is a hydrolyzing group and a and b are 0 or 1.

General formula (B) AlXₙY₃₋ₙ

where X is OL with L representing a lower alkyl group; Y is at least one member selected from the ligands derived from the compounds represented by the general formulas (C)

M¹COCH₂COM²

wherein each of M¹ and M² is a lower alkyl group, and (D)

M³COCH₂COOM⁴

wherein each of M³ and M⁴ is a lower alkyl group; and n is 0, 1 or 2.

This layer B also provides a gas barrier function in the plastic optical article.

The hydrophilic resin according to the present invention may be any type of water-soluble resin, for example, hydroxylalkyl-substituted derivatives of cellulose, polyacrylamides, poly(meth)acrylic acid and metal salts thereof, totally or partially saponified polyvinyl acetate, and polyvinylpyrrolidone, as well as polyhydroxyalkyl (meth)acrylates and their copolymers, alkylpolyalkyleneoxide (meth)acrylate polymers and their copolymers, and hydrophilic urethane resins; it is not limited so long as its hydrophilicity is sufficient to exhibit a gas barrier effect. From the standpoint of compatibility and crosslinkability with the organic silicon compound, it is particularly preferable to use a hydroxy-containing polymer, for example a hydroxyalkyl cellulose, totally or partially saponified polyvinyl acetate, generally known as polyvinyl alcohol, polyhydroxy (meth)acrylate, or a copolymer thereof. Specific examples of hydroxyalkyl celluloses include hydroxymethyl cellulose, hydroxyethyl cellulose and hydroxypropyl cellulose. Also, a polyvinyl alcohol particularly preferred for use according to the present invention has an average polymerization degree of 250-3000 and a saponification degree of 70 mol% or greater. If the average polymerization degree is less than 250, the durability and particularly the moisture resistance will be lacking, and if it is greater than 3000 the viscosity of the composition after it is made into a paint will be high, leading to difficulty in obtaining a smooth coating, as well as other working problems. Also, if the saponification degree is less than 70 mol%, adequate gas barrier characteristics cannot be expected.

As polyhydroxyalkyl (meth)acrylates there may be mentioned polyhydroxyethyl acrylate, polyhydroxyethyl methacrylate, polyhydroxypropyl acrylate, polyhydroxypropyl methacrylate and copolymers of these polymers prepared by adding other monomers, for example methyl methacrylate and the like.

These hydrophilic resins do not display their effect of improving the gas barrier properties of layer B if they are present in too low a proportion. On the other hand, the hydrophilic resin is preferably not present in layer B in too high a proportion from the viewpoint of improving the other properties provided by the coating of layer B, such as heat resistance, chemical resistance, solvent resistance, hardness and durability. In view of the above, the proportion of the hydrophilic resin in layer B is preferably 10-95%.

Furthermore, the use of an organosilicon compound and aluminum chelate compound in the cured film composed mainly of a hydrophilic resin and an organosilicon compound is preferred from the standpoint of improving the durability, adhesion to the transparent resin substrate, moisture resistance and the necessary hydrochloric acid resistance during etching after the conductive layer is set. In addition, there may be added more than one hydrophilic resin, organosilicon compound and aluminum chelate compound.

First, the organosilicon compound is not particularly limited, but organosilicon compounds represented by the following formula (A) and their hydrolysates are preferred.

General formula (A) R¹ ₐR² _{b}SiX_{4-a-b}

where R¹ is an organic group of 1-10 carbon atoms, R² is a hydrocarbon or halogenated hydrocarbon group of 1-6 carbon atoms, X is a hydrolyzing group and a and b are 0 or 1.

Specific examples thereof are (i) as tetrafunctional silane compounds: tetraalkoxysilanes and their hydrolysates, such as methyl silicate, ethyl silicate, n-propyl silicate, iso-propyl silicate, n-butyl silicate, sec-butyl silicate and t-butyl silicate; (ii) as trifunctional silane compounds: trialkoxysilanes, triacyloxysilanes, triphenoxysilanes and their hydrolysates, such as methyltrimethoxysilane, methyltriethoxysilane, methyltriacetoxysilane, methyltripropoxysilane, methyltributoxysilane, ethyltrimethoxysilane, ethyltriethoxysilane, vinyltrimethyoxysilane, vinyltriethoxysilane, vinyltriacetoxysilane, phenyltrimethoxysilane, phenyltriethoxysilane, phenyltriacetoxysilane, γ-chloropropyltrimethoxysilane, γ-chloropropyltriethoxysilane, γ-chloropropyltriacetoxysilane, γ-methacryloxypropyltrimethoxysilane, γ-aminopropyltrimethoxysilane, γ-aminopropyltriethoxysilane, γ-mercaptopropyltrimethoxysilane, γ-mercaptopropyltriethoxysilane, N-β-(aminoethyl)-γ-aminopropyltrimethoxysilane, β-cyanoethyltriethoxysilane, methyltriphenoxysilane, chloromethyltrimethoxysilane, chloromethyltriethoxysilane, glycidoxymethyltrimethoxysilane, glycidoxymethyltriethoxysilane, α-glycidoxyethyltrimethoxysilane, α-glycidoxyethyltriethoxysilane, β-glycidoxyethyltrimethoxysilane, β-glycidoxyethyltriethoxysilane, α-glycidoxypropyltrimethoxysilane, α-glycidoxypropyltriethoxysilane, β-glycidoxypropyltrimethoxysilane, β-glycidoxypropyltriethoxysilane, γ-glycidoxypropytrimethoxysilane, γ-glycidoxypropyltriethoxysilane, γ-glycidoxypropyltripropoxysilane, γ-glycidoxypropyltributoxysilane, γ-glycidoxypropyltriphenoxysilane, α-glycidoxybutyltrimethoxysilane, α-glycidoxybutyltriethoxysilane, β-glycidoxybutyltrimethoxysilane, β-glycidoxybutyltriethoxysilane, γ-glycidoxybutyltrimethoxysilane, γ-glycidoxybutyltriethoxysilane, δ-glycidoxybutyltrimethoxysilane, δ-glycidoxybutyltriethoxysilane, (3,4-epoxycyclohexyl)methyltrimethoxysilane, (3,4-epoxycyclohexyl)methyltriethoxysilane, β-(3,4-epoxycyclohexyl)ethyltrimethoxysilane, β-(3,4-epoxycyclohexyl)ethyltriethoxysilane, β-(3,4-epoxycyclohexyl)ethyltripropoxysilane, β-(3,4-epoxycyclohexyl)ethyltributoxysilane, β-(3,4-epoxycyclohexyl)ethyltriphenoxysilane, γ-(3,4-epoxycyclohexyl)propyltrimethoxysilane, γ-(3,4-epoxycyclohexyl)propyltriethoxysilane, δ-(3,4-epoxycyclohexyl)butyltrimethoxysilane, δ-(3,4-epoxycyclohexyl)butyltriethoxysilane, etc.; and (iii) as difunctional silane compounds: dialkoxysilanes, diphenoxysilanes and diacyloxysilanes and their hydrolysates, such as dimethyldimethoxysilane, phenylmethyldimethoxysilane, dimethyldiethoxysilane, phenylmethyldiethoxysilane, γ-chloropropylmethyldimethoxysilane, γ-chloropropylmethyldiethoxysilane, dimethyldiacetoxysilane, γ-methacryloxypropylmethyldimethoxysilane, γ-methacryloxypropylmethyldiethoxysilane, γ-mercaptopropylmethyldimethoxysilane, γ-mercaptopropylmethyldiethoxysilane, γ-aminopropylmethyldimethoxysilane, γ-aminopropylmethyldiethoxysilane, methylvinyldimethoxysilane, methylvinyldiethoxysilane, glycidoxymethylmethyldimethoxysilane, glycidoxymethylmethyldiethoxysilane, α-glycidoxyethylmethyldimethoxysilane, α-glycidoxyethylmethyldiethoxysilane, β-glycidoxyethylmethyldimethoxysilane, β-glycidoxyethylmethyldiethoxysilane, α-glycidoxypropylmethyldimethoxysilane, α-glycidoxypropylmethyldiethoxysilane, β-glycidoxypropylmethyldimethoxysilane, β-glycidoxypropylmethyldiethoxysilane, γ-glycidoxypropylmethyldimethoxysilane, γ-glycidoxypropylmethyldiethoxysilane, γ-glycidoxypropylmethyldipropoxysilane, γ-glycidoxypropylmethyldibutoxysilane, γ-glycidoxypropylmethylmethoxyethoxysilane, γ-glycidoxypropylmethyldiphenoxysilane, γ-glycidoxypropylmethyldiacetoxysilane, γ-glycidoxypropylethyldimethoxysilane, γ-glycidoxypropylethyldiethoxysilane, γ-glycidoxypropylvinyldimethoxysilane, γ-glycidoxypropylvinyldiethoxysilane, γ-glycidoxypropylphenyldimethoxysilane, γ-glycidoxypropylphenyldiethoxysilane, etc.

One or more of these organosilicon compounds may be added to the coating composition of layer B.

Furthermore, although any of the above-mentioned organosilicon compounds may be used, a difunctional silane compound represented by the general formula (E) is preferably used for greater improvement in the gas barrier properties of layer B.

General formula (E) R³R⁴SiX₂

where R³ and R⁴ are organic groups of 1-10 carbon atoms and X is a hydrolyzing group.

Also, from the standpoint of improvement in the gas barrier properties, there are preferably a large number of hydroxy, carboxylic and other hydrogen bonding groups present in the hydrophilic resin. If there are too few, the organosilicon compound added to the system reacts with the hydroxy and carboxylic groups of the hydrophilic resin.

The cured layer becomes crosslinked by this reaction, providing improved properties such as heat resistance, chemical resistance, solvent resistance, hardness and durability to the cured layer. Therefore, the amount of the organosilicon compound to be added must be determined with care so as not to impair these properties. Thus the organosilicon compound is added to the cured gas barrier layer in an amount preferably of 0.01-20%, and more preferably of 0.1-10%, for optimum balance of the properties.

These organosilicon compounds are preferably hydrolyzed before use in order to lower the hardening temperature and further promote the curing. The hydrolysates may be obtained by adding and mixing therewith purified water or an aqueous acidic solution such as hydrochloric acid, acetic acid or sulfuric acid. By adjusting the amount of the purified water or aqueous acidic solution added it is possible to easily control the degree of hydrolysis. For the hydrolysis, in order to promote curing, the purified water or aqueous acidic solution is preferably added in an amount of 1 to 3 molar equivalents of the hydrolyzing groups in the compound represented by general formula (A).

Since an alcohol, etc. is generated during the hydrolysis, the reaction may be conducted without a solvent. However, to promote the hydrolysis with further uniformity, it may be carried out after the organosilicon compounds and the solvent are mixed. Depending on the intended object, the alcohol, etc. may be removed by heating and/or by evaporation at a reduced pressure after the hydrolysis, and a suitable solvent may also be added thereafter.

The aluminum chelate compound used together with the organosilicon compound is most preferably an aluminum chelate compound represented by the following general formula (B).

General formula (B) AlXₙY₃₋ₙ

where X is OL with L representing a lower alkyl group; Y is at least one member selected from the ligands derived from the compounds represented by the general formulas (C)

M¹COCH₂COM²

wherein each of M¹ and M² is a lower alkyl group, and (D)

M³COCH₂COOM⁴

wherein each of M³ and M⁴ is a lower alkyl group; and n is 0, 1 or 2.

Although a wide variety of compounds may be mentioned as the aluminum chelate compounds represented by general formula (B), particularly preferred are aluminum acetylacetonate, aluminum bisethylacetoacetate-monoacetylacetonate, aluminum di-n-butoxide-monoethylacetoacetate and aluminum di-iso-propoxide-monomethylacetoacetate from the standpoint of solubility, stability in the composition, and effect as curing catalysts. Two or more of these aluminum chelate compounds may be used in admixture in the coating composition of layer B.

The amount of these aluminum chelate compounds to be added is preferably in the range of 0.01-10 parts with respect to the cured film of layer B. If the amount of the aluminum chelate compound is less than 0.01 parts, the curing of layer B is not satisfactory and the resulting hardness and durability does not withstand use, while if it is greater than 10 parts, yellowing of layer B occurs. Furthermore, if the aluminum chelate compound is added only in the minimum required amount, the potlife of the paint used to prepare layer B becomes shorter, and the gas barrier properties of layer B are impaired. The amount of the aluminum chelate compound to be added is determined based on the above considerations and depending on the circumstances, but it is most preferably in the range of 0.1-0.05 parts.

The composition described above is preferably diluted in a common volatile solvent and applied as a liquid composition, and there are no particular restrictions on the solvent used; however, it must not damage the surface characteristics of the applied coating when used, and it should be selected with consideration to the stability of the composition, wettability to the substrate, volatility, etc. Two or more solvents may also be used in admixture. Specific examples of these solvents are alcohols, esters, ethers, ketones such as methyl isobutyl ketone, dimethylformamide, dimethylsulfoxide and dimethylimidazolidinone.

When the liquid composition is applied onto the transparent resin layer (A) and the cured layer (B) is formed thereon, the properties of the solvent are expected to greatly influence the structure of the cured layer. Therefore, the properties of the above-mentioned solvents affect the optical and gas barrier properties which reflect the structure of the cured layer, and consequently the solvent must be selected while considering these aspects. Study has revealed that inclusion of a cyclic ether compound as part of the solvent is effective for obtaining good properties of the cured layer, including optical and gas barrier properties.

Specific examples of such cyclic ether compounds include tetrahydrofuran, tetrahydropyran, hexamethyleneoxide, 1,3-dioxolane, 1,4-dioxane, 2-methyl-1,3-dioxolane, 4-methyl-1,3-dioxalane, 4-methyl-1,3-dioxane, 2,4-dimethyl-1,3-dioxane, and the like.

In addition, inclusion of dimethylimidazolidinone in the solvent is effective for improving the properties of adhesion between the cured resin and the substrate. However, if the dimethylimidazolidinone is added to the solvent in too great an amount the degree of yellowing of the cured film becomes higher, thus complicating its use in optical applications. Consequently, its content in the solvent is preferably in the range of 0.01-10%, to both maintain adhesion with the substrate and minimize yellowing of the cured film.

Inorganic fine particles may also be combined with the film for improved durability of the film and for a proper linear expansion coefficient. The inorganic fine particles used for this purpose are not particularly limited so long as they do not impair the transparency when in the form of a film. From the standpoint of improved operation efficiency and imparting transparency, sols dispersed in colloidal form are particularly preferred. Specific examples thereof include silica sol, antimony oxide sol, titania sol, zirconia sol, alumina sol, tungsten oxide sol, and the like. There is no problem with surface treating the fine particles or adding surfactants or amines for better dispersability of the inorganic fine particles. Of the above examples, silica sol is used preferentially. The silica sol preferably has an average particle size of 1-200 nm. Silica sol is a colloidal dispersion of high-molecular-weight silicic anhydride in water and/or an organic solvent such as alcohol. For the purpose of the present invention, a sol with an average particle size of 1-200 nm is used, but the average particle size is preferably 5-100 nm, and more preferably 20-80 nm. Sols with an average particle size of less than 1 nm have poor stability as dispersions and make it difficult to achieve constant quality, while those over 200 nm lead to poor transparency of the resulting film and only yield very turbid films.

Any type of additive or modifier may also be included in the cured layer. As the additive there may be used a surfactant for improved surface smoothness, and specifically, silicone compounds, fluorine surfactants and organic surfactants may be used. As the modifier there may be added an organic polymer with good compatibility with the hydrophilic resin and organosilicon compound, such as alcohol-soluble nylon, as well as tetrafunctional silane compounds such as ethyl silicate, n-propyl silicate, i-propyl silicate, n-butyl silicate, sec-butyl silicate, t-butyl silicate, etc. Various epoxy resins, melamine resins and amide resins are also suitable. Various curing agents may also be used in combination therewith, to promote curing and allow hardening at low temperature. Curing agents for epoxy resins or organosilicon resins may be used as the curing agent. Concrete examples of such curing agents are organic acids and their acid anhydrides, nitrogenous organic compounds, various metal complexes, metal alkoxides, various salts such as organic carboxylates and carbonates of alkali metals, and radical polymerization initiators such as peroxides and azobisisobutyronitrile. Two or more kinds of these curing agents may be used in admixture. Of these curing agents, the above-mentioned aluminum chelate compounds are particularly useful from the point of view of stability of the coating composition and prevention of coloring of the film after coating.

Depending on the use to which the present invention is applied, other additives in addition to the hydrophilic resin and organosilicon compound may provide improvements in the various properties such as gas barrier, conductivity, durability, heat resistance, weatherability, adhesion and chemical resistance of the film formed by the composition of the cured film of the present invention composed mainly of a hydrophilic resin and an organosilicon compound.

The composition for forming the cured layer may be prepared by simply mixing the components, or depending on the components, pretreatment such as hydrolysis and the mixing of the other components; any methods for these may be usefully employed in the production of the composition of the present invention.

The method of applying the coating composition for the cured layer on the transparent resin may be any ordinary coating method such as brush coating, dip coating, roll coating, spray coating, spin coating, flow coating or the like.

For application of the coating composition, various pretreatments are effective to improve the cleanness, adhesion, moisture resistance, and so forth. Particularly preferred methods are activated gas treatment, chemical treatment and UV treatment. These pretreatments may be performed together either continuously or step-wise.

Activated gas treatment is treatment utilizing ions, electrons or activated gases generated at normal or reduced pressure. The methods of generating such activated gases include corona discharge, and high voltage discharge using direct current, low frequency, high frequency or microwaves, at a reduced pressure.

The gas to be used is not particularly limited, and specific examples thereof include oxygen, nitrogen, hydrogen, carbon dioxide, sulfur dioxide, helium, neon, argon, freon, water vapor, ammonia, carbon monoxide, chlorine, nitrogen monoxide, nitrogen dioxide, and the like. These gases may be used alone or as a mixture of two or more. Of the examples mentioned above, oxygen-containing gases, particularly those existing naturally, such as air, are preferred. Pure oxygen gas is more preferable for improved adhesion. During the treatment, the temperature of the treated substrate may be raised for the same purpose.

Specific examples of chemical treatment include (i) alkali treatment using caustic soda, (ii) acid treatment using hydrochloric acid, sulfuric acid, potassium permanganate, potassium dichromate, etc., and (iii) organic solvent treatment.

The pretreatment described above may be performed either continuously or step-wise.

The thickness of the cured layer of the present invention composed mainly of the hydrophilic resin and the organic silicon compound is not particularly limited, but is preferably within the range of 0.1 to 150 µ, and more preferably 0.3 to 70 µ, from the point of view of imparting gas barrier properties, maintaining adhesion strength, hardness, durability of the metal oxide and/or metal nitride layer, and durability of the transparent conductive layer. When applying the layer, the composition is diluted in various solvents to adjust the operation efficiency and the thickness of the cured layer, and various solvents may be used, including water, alcohol, esters, ethers, halogenated hydrocarbons, dimethylformamide, dimethyl sulfoxide, etc., in accordance with the intended object. A mixed solvent may also be used, if necessary.

The cured layer is obtained by curing the above-mentioned coating composition, and the curing may be performed by heat treatment. The heating temperature is appropriately selected based on the components of the coating composition and the heat resistance of the transparent resin, but it is preferably from 50°C to 250°C. At lower than 50°C the curing is insufficient, and at higher than 250°C coloring and deterioration of the cured film results.

The gas barrier property of oxygen permeability of the cured layer of the present invention composed mainly of the hydrophilic resin and the organic silicon compound is preferably 50 [cc/m²·day·atm] or less and more preferably 10 [cc/m²·day·atm] or less.

For the purpose of improved gas barrier properties, conductivity, durability, heat resistance, abrasion resistance and chemical resistance of the cured layer, there is no problem with forming a multi-layered film consisting of 2 or more layers of the composition having the same or different component ratios.

The transparency of the transparent resin containing the cured layer, when expressed as the total light transmittance when no coloring occurs, is preferably 60% or greater, and more preferably 80% or greater. When used for applications requiring optical isotropy, such as for a liquid crystal display substrate, optical disk substrate or the like, the birefringence is preferably below 30 nm, and more preferably below 15 nm.

Layer B2 is composed mainly of a resin with an oxygen permeability coefficient of 1 × 10⁻¹³ [cm³·cm/cm²·sec·Pa] or less, and a water vapor permeation coefficient of 1 × 10⁻¹⁰ [cm³·cm/cm²·sec·Pa] or less.

Specific examples of this type of resin include polyvinylnitrile resins such as polyacrylonitrile, polymethacrylonitrile and poly(2-chloroacrylonitrile); polyvinylidene halide resins such as polyvinylidene chloride, polyvinylidene fluoride; vinyl halide resins such as vinyl chloride resin; polyamide resins such as nylon-6, nylon-66 and nylon-11; and polyester resins such as polyethylene terephthalate. Also included are copolymers of these the monomer units of these polymers. Latex polymers composed mainly of these resins may be preferentially used for their ease of application. Specifically, "SARAN LATEX" of Asahi Kasei Kogyo Co. and "CREHALON LATEX" of Kureha Kagaku Kogyo Co. may be mentioned.

Inorganic fine particles may also be incorporated with the resin in layer B2 for improved durability of the film and for a proper linear expansion coefficient. The inorganic fine particles used for this purpose are not particularly limited so long as they do not impair the transparency when in the form of a film. From the standpoint of improved operation efficiency and imparting transparency, sols dispersed in colloidal form are particularly preferred. Specific examples thereof include silica sol, antimony oxide sol, titania sol, zirconia sol, alumina sol, tungsten oxide sol, and the like. There is no problem with surface treating the fine particles or adding surfactants or amines for better dispersability of the inorganic fine particles. The inorganic fine particles preferably have an average particle size of 1-200 nm, more preferably 5-100 nm, and even more preferably 20-80 nm. Particles with an average particle size of less than 1 nm have poor stability as a dispersion and make it difficult to achieve constant quality, while those over 200 nm lead to poor transparency of the resulting film and only yield very turbid films.

In addition, surfactants required for formation of a uniform film and crosslinkers required for improved solvent resistance of the film may be incorporated as necessary.

The following method may be mentioned as a means for coating the layer B2 film on the transparent resin. The above-mentioned coating composition composed mainly of a resin with an oxygen permeability coefficient of 1 × 10⁻¹³ [cm³·cm/cm²·sec·Pa] or less, and a water vapor permeation coefficient of 1 × 10⁻¹⁰ [cm³·cm/cm²·sec·Pa] or less is dissolved in a solvent capable of dissolving it, and this solution is used as a paint for application by an ordinary coating method such as brush coating, dip coating, roll coating, spray coating, spin coating, flow coating or the like.

As the transparent electro-conductive layer which is layer C of the present invention, there may be used a conductive thin film of a metal oxide such as ITO, tin oxide, cadmium oxide, etc., a metal such as gold, silver, copper, palladium, nickel, aluminum, chromium, etc. or a conductive polymer. Of these, ITO is preferably used when various properties such as transparency and low resistance are being considered. Publicly known methods can be used to form the metal oxide thin film such as the ITO film or metal thin film, including the vacuum deposition method, ion plating method, sputtering method, coating method or spraying method. A known method such as DC sputtering, RF discharge sputtering or magnetron sputtering may be used as the sputtering method ("Sputtering Phenomenon", Akira Kimbara, published by The Tokyo University Press, 1984). The substrate temperature when forming the film may be appropriately selected based on the type of the transparent resin and cured layer, giving consideration to transparency, low resistance, adhesion, heat resistance and chemical resistance. Also, the proportion of the ITO is preferably determined based on the surface resistance value, specific resistance, transparency, etc. required for a transparent electroconductive layer, but from the standpoint of low resistance and transparency, the SnO₂ content is preferably 25 wt% or less, and for an even lower resistance value, a high density ITO target close to the true density of ITO is preferably used as the ITO target. The thickness of the transparent conductive film is not particularly limited, but from the standpoint of conductivity, film formation time and mechanical properties, it is preferably selected appropriately within the range of 150-5000 angstroms.

The inorganic fine particles to be used in layer D of the present invention are not particularly limited so long as they do not impair the transparency when in the form of a film. From the standpoint of improved operation efficiency and imparting transparency, sols dispersed in colloidal form are particularly preferred. More specific examples thereof include silica sol, antimony oxide sol, titania sol, zirconia sol, alumina sol, tungsten oxide sol, and the like. There is no problem with surface treating the fine particles or adding surfactants or amines for better dispersability of the inorganic fine particles.

The inorganic fine particles are added for improvement in the surface hardness, adjustment of the refractive index, improvement in the mechanical strength, improvement in the thermal properties, and improvement in the durability of the metal oxide and/or metal nitride layer constructed on the cured layer containing the inorganic fine particles.

The particle size of the inorganic fine particles is not particularly limited, but it is normally 1-200 nm, preferably 5-100 nm, and more preferably 20-80 nm. Particles with an average particle size of less than 1 nm have poor stability as a dispersion and make it difficult to achieve constant quality, while those over 200 nm lead to poor transparency of the resulting film and only yield very turbid films.

The amount of the inorganic fine particles to be added is not particularly limited, but in order to achieve a notable effect it is preferably 1 wt% or more and 80 wt% or less in the transparent film. At less than 1 wt% a clear effect of the addition is not recognized, and at greater than 80 wt% problems tend to occur such as poor adhesion to plastic substrates, cracking of the film itself, and lower impact resistance.

The cured layer containing the inorganic fine particles composing layer D of the present invention contains an organic polymer in addition to the inorganic fine particles. Specific examples of organic polymers making up the cured layer are acrylic resins, silicone resins, polyurethane resins, epoxy resins, melamine resins, polyolefinic resins, cellulose resins, polyvinyl alcohol resins, urea resins, nylon resins, polycarbonate resins, and the like. These resins may be used alone or as 2 or more in admixture, and various curing agents and crosslinking agents may also be used for three-dimensional crosslinking. For applications where surface hardness is particularly important, a curable resin is preferred, and for example, a simple or complex system of an acrylic resin, silicone resin, epoxy resin, polyurethane resin or melamine resin is preferably used. Furthermore, when various properties such as surface hardness, heat resistance, chemical resistance and transparency are taken into consideration, a silicon resin is particularly preferred as the organic polymer, and polymers obtained from the organosilicon compounds represented by the aforementioned general formula (A) or their hydrolysates are even more preferred.

One or more of the above-mentioned organic silicon compounds may be added. In particular, to impart dyeability, the use of the organosilicon compound containing an epoxy group and a glycidoxy group is preferable, and the resulting product has a high addition value.

The film-forming composition composed mainly of a silicone resin may contain, in addition to the silicone resin, an acrylic resin, polyurethane resin, epoxy resin, melamine resin, polyolefin resin, cellulose resin, polyvinyl alcohol resin, urea resin, nylon resin or polycarbonate resin; these are not particularly limited but must be within a range which does not lead to deterioration of the transparency and which provides the necessary surface hardness.

Various curing agents may also be used in combination with the coating composition used in forming the cured layer containing the inorganic fine particles, to promote curing and allow hardening at low temperature. Curing agents for epoxy resins or organosilicon resins may be used as the curing agent.

Concrete examples of such curing agents are organic acids and their acid anhydrides, nitrogenous organic compounds, various metal complexes, metal alkoxides, various salts such as organic carboxylates and carbonates of alkali metals, as well as radical polymerization initiators such as peroxides and azobisisobutyronitrile. Two or more kinds of these curing agents may be used in admixture. Of these curing agents, the above-mentioned aluminum chelate compounds are particularly useful from the point of view of stability of the coating composition and prevention of coloring of the film after coating.

Various surfactants may be added to the coating composition used for forming the cured layer containing the inorganic fine particles, to thus improve the flow at the time of application, to improve the smoothness of the cured layer, and to reduce the friction coefficient of the film surface. Particularly, block or graft copolymers of dimethylpolysiloxane and alkylene oxide and fluorine type surfactants are effective.

Inorganic materials other than the inorganic fine particles may be added to the coating composition used for forming the cured layer containing the inorganic fine particles, within a range in which the film properties and transparency are not greatly lowered. The combined use of these additives can improve various characteristics such as adhesion to the substrate, chemical resistance, surface hardness, durability and dyeability. The inorganic materials that can be added are metal alkoxides represented by the following general formula (G), chelate compounds and/or their hydrolysates.

General formula (G) M(OR)ₘ

wherein R is an alkyl group, an acyl group or an alkoxyalkyl group, m is the same value as the charge number of the metal M, and M is silicon, titanium, zirconium, antimony, tantalum, germanium or aluminum.

Furthermore, a UV-absorber may be added to improve the weatherability, or an antioxidant may be added as a means of preventing lowering of the heat resistance.

The method of applying the coating composition for the cured layer containing the inorganic fine particles which is to be applied on the cured resin composed mainly of a transparent resin and a hydrophilic resin, may be any ordinary coating method such as brush coating, dip coating, roll coating, spray coating, spin coating, flow coating or the like.

For application of the coating composition, various pretreatments are effective to improve the cleanness, adhesion, moisture resistance, and so forth. Particularly preferred methods are activated gas treatment, chemical treatment and UV treatment. These pretreatments may be performed together either continuously or step-wise.

Activated gas treatment is treatment utilizing ions, electrons or activated gases generated at normal or reduced pressure. The methods of generating such activated gases include corona discharge, and high voltage discharge using direct current, low frequency, high frequency or microwaves, at a reduced pressure.

The gas to be used is not particularly limited, and specific examples thereof include oxygen, nitrogen, hydrogen, carbon dioxide, sulfur dioxide, helium, neon, argon, freon, water vapor, ammonia, carbon monoxide, chlorine, nitrogen monoxide, nitrogen dioxide, and the like. These gases may be used alone or as a mixture of two or more. Of the examples mentioned above, oxygen-containing gases, particularly those existing naturally, such as air, are preferred. Pure oxygen gas is more preferable for improved adhesion. During the treatment, the temperature of the treated substrate may be raised for the same purpose.

Specific examples of chemical treatment include (i) alkali treatment using caustic soda, (ii) acid treatment using hydrochloric acid, sulfuric acid, potassium permanganate, potassium dichromate, etc., and (iii) organic solvent treatment.

The pretreatment described above may be performed either continuously or step-wise.

The thickness of the cured layer containing the inorganic fine particles is not particularly limited, but is preferably within the range of 0.1 to 50 µ, and more preferably 0.3 to 10 µ, from the point of view of maintaining adhesion strength, and hardness. When applying the film, the composition is diluted in various solvents to adjust the operation efficiency and the film thickness, and various solvents may be used, including water, alcohol, esters, ethers, halogenated hydrocarbons, dimethylformamide, dimethyl sulfoxide, etc., in accordance with the intended object, and a mixed solvent may also be used, if necessary. From the standpoint of dispersability of the fine particulate inorganic oxide, polar solvents such as water, alcohol, dimethylformamide, ethylene glycol, diethylene glycol, triethylene glycol, benzyl alcohol, phenethyl alcohol and phenyl cellosolve are preferably used.

The cured layer containing the inorganic fine particles is obtained by curing the above-mentioned coating composition, and the curing may be performed by heat treatment. The heating temperature is appropriate selected depending on the components of the coating composition and the heat resistance of the transparent resin, but it is preferably from 50°C to 250°C. At lower than 50°C the curing is insufficient, and at higher than 250°C coloring and deterioration of the cured layer results.

For the purpose of further improved heat resistance, abrasion resistance and chemical resistance of the cured layer containing the inorganic fine particles, there is no problem with forming a multi-layered film consisting of 2 or more layers of the composition having the same or different component ratios. The transparency of the transparent resin containing the cured layer composed mainly of a hydrophilic resin and an organic silicon compound, which has a cured layer containing inorganic fine particles, when expressed as the total light transmittance when no coloring occurs, is preferably 60% or greater, and more preferably 80% or greater. When used for applications required optical isotropy, such as for a liquid crystal display substrate, optical disk substrate or the like, the birefringence is preferably below 30 nm, and more preferably below 15 nm.

Methods which may be used to form the metal oxide film and/or metal nitride film as layer E of the present invention, include the vacuum deposition method, ion plating method, plasma CVD method, and sputtering methods such as RF discharge sputtering, DC sputtering or magnetron sputtering, and in order to impart high gas barrier properties the sputtering method is preferred, of which RF discharge sputtering is particularly preferred. Metal oxide films formed by RF discharge sputtering are prepared in an inert gas atmosphere and/or active gas atmosphere, using a metal oxide dielectric or insulator as the sputtering gate. The sputtering gas is preferably an inert gas such as He, Ne, Ar, Kr, Xe or Rn, and Ar is particularly preferred from the point of view of cost, availability and sputtering rate. The active gas used may be O₂, N₂, CO or oxygen, and O₂ is preferably used in order to compensate for loss of oxygen by the sputtering film during formation of the metal oxide film. The O₂ concentration (partial pressure with respect to the inert gas) is appropriately selected based on the type of cured layer containing the inorganic fine particles, the substrate temperature, the target material, the sputtering rate and the making current, but it is usually 0.1-10%. According to the present invention, this concentration is preferably 5% or less, and more preferably 1% or less, from the standpoint of alleviating plasma damage to the transparent film. Also, the substrate temperature is appropriately selected based on the type of transparent resin and cured film used, in consideration of the gas barrier properties, high transparency, adhesion, heat resistance and chemical resistance. The material used for the metal oxide film and/or metal nitride film may be one, or a mixture of 2 or more selected from metal oxide films made of SiO₂, ZrO₂, TiO₂, Y₂O₃, Yb₂O₃, MgO, Ta₂O₅, CeO₂ or HfO₂ containing the metals Si, Zr, Ti, Y, Yb, Mg, Ta, Ce or Hf, respectively, or metal nitride films such as Si₃N₄; however, from the viewpoint of cost, transparency, gas barrier properties and durability of the transparent conductive layer formed on the metal oxide film, it is preferably one or a mixture of 2 or more metal oxides containing Si, Al or Ti, or a metal nitride such as Si₃N₄. The gas barrier properties of the metal oxide film and/or metal nitride film is preferably 100 [cc/m²·day·atm] or less and more preferably 0.01-50 [cc/m²·day·atm]. The thickness of the metal oxide and/or metal nitride layer is not particularly restricted, but from the standpoint of imparting gas barrier properties and durability of the transparent conductive layer, it is preferably 50-2000 angstroms, and more preferably 100-1200 angstroms.

The method of combining and the order of laminating each of the layers composing a plastic optical article according to the present invention, i.e. layer A (the transparent resin), layer B (the cured layer composed mainly of a hydrophilic resin and an organic silicon compound), layer C (the transparent conductive layer), layer D (the cured layer containing inorganic fine particles), and layer E (the metal oxide and/or metal nitride film), are not particularly restricted so long as, in the case of optical articles with a layer C (transparent conductive layer), there are included at least one each of layers A, B, C and D. Also, in the case of optical articles with a layer E (metal oxide and/or metal nitride film), the method of combination and the order of lamination are not particularly restricted so long as there are included at least one each of layers A, B, D and E. Also, there is no problem if a single optical article contains more than one type of each layer.

The method of combination and the order of lamination of each of the layers composing a plastic optical article according to the present invention is preferably, in the case of optical articles wherein layer C is an essential constituent element, D-A-B-D-C, D-A-D-B-C, D-B-A-D-C, B-D-A-D-C, D-B-A-B-D-C or B-D-A-D-B-C; in the case of optical articles wherein layer E is an essential constituent element, D-A-D-B-E, D-A-D-E-B, B-D-A-D-E, D-A-B-D-E, D-B-A-D-E, D-A-E-D-B, D-E-A-D-B, D-A-B-E-D, D-A-E-B-D, D-B-A-E-D, B-D-A-D-B-E, B-D-A-D-E-B, D-B-A-B-D-E, B-D-A-E-D-B, D-B-A-B-E-D or D-B-A-E-B-D; and in the case of optical articles with both a layer C and a layer E, D-A-D-B-E-C, B-D-A-D-E-C, D-A-B-D-E-C, D-B-A-D-E-C, B-D-A-D-B-E-C or D-B-A-B-D-E-C, etc. In addition, in cases where the plastic optical article of the present invention is to be used as a transparent conductive material for a liquid crystal display or the like, the method of combination and order of lamination of each layer is preferably D-A-D-B-E-C, D-A-B-D-E-C, D-B-A-D-E-C or D-B-A-B-D-E.

A plastic optical article obtained according to the present invention has excellent gas barrier properties, transparency, heat resistance, light resistance, weatherability, impact resistance, glazing, chemical resistance and optical isotropy, and thus may be suitably applied in optical lenses such as eyeglass lenses, sunglass lenses, camera lenses, video camera lenses, goggle lenses, contact lenses, and the like. In addition, it may be applied in light-guiding waveguide plates of liquid crystal displays and front-, rear- and roof-windows of automobiles and airplanes, as well as in optical disk substrates and other types of display substrate materials, because of its excellent optical isotropy.

The plastic optical articles of the present invention which have a transparent conductive layer such as ITO may be employed as transparent conductor materials because of their conductivity and transparency. Specifically, they may be applied to electric circuit component materials such as capacitors and resistors, duplicating materials for electrophotographs and electrophotographic recording; transparent electrodes for liquid crystal displays, electrochromic displays, electroluminescent displays and signal inputs for touch panels; photoelectric conversion elements such as solar cells and light amplifiers; as well as for anti-static effects, electromagnetic wave blocking, heating elements, sensors, and the like. Furthermore, in view of mechanical characteristics, the thickness thereof is preferably 0.1-10 mm, and more preferably 0.3-1.0 mm.

A plastic optical article with a transparent conductive layer according to the present invention may be used as a heat resistant transparent conductive material since the electrical conductivity of the transparent conductive layer is maintained even at high temperatures. It is particularly suitable for use as a liquid crystal display substrate. The heat resistant transparent conductive substrate can be applied to a liquid crystal display of a simple matrix type such as a TN (Twisted Nematic) type, STN (Super Twisted Nematic) type or ferroelectric liquid crystal (FLC) type, or to an active matrix type liquid crystal display such as an MIM (Metal-Insulator-Metal) type or TFT (Thin-Film Transistor) type, but it is preferably used for a simple matrix type liquid crystal display because the production process therefor is relatively simple.

When a heat resistant transparent conductive material comprising a plastic optical article with a transparent conductive layer according to the present invention is used as a liquid crystal display substrate, a structure is employed wherein the liquid crystal is sandwiched by the heat resistant transparent conductive layer. That is, in a conventional liquid crystal display using a glass substrate, the heat resistant transparent conductive material comprising the plastic optical article of the present invention replaces the glass substrate. More specifically, there is employed a structure in which the liquid crystal layer is sandwiched between substrates comprising plastic optical articles on which a passivation film is formed, if necessary, and an orientation film is further superposed thereon. A polarizing plate is disposed outside each of the substrates sandwiching the liquid crystal layer. A phase contrast plate and a light-reflecting plate are further disposed on the liquid crystal display, if necessary.

In this construction in which the liquid crystal is sandwiched between the heat resistant transparent conductive materials, the substrates sandwiching the liquid crystal layer have a structure including a layer B (gas barrier layer) with high-temperature gas barrier properties and a layer E (metal oxide and/or metal nitride layer), disposed so that these high gas barrier layers sandwich the liquid crystal layer. Consequently, the air permeability and moisture permeability of the substrates themselves are . greatly reduced, while the air permeability and moisture permeability of the liquid crystal layer is also suppressed, thus solving the problems of deterioration of the liquid crystal substance by oxygen permeation and increased power consumption of the display device due to moisture permeation, and greatly improving the life-span and reliability of the liquid crystal display.

Publicly known methods may be applied for the production of the liquid crystal display using a plastic optical article according to the present invention. For example, in the case of a simple matrix liquid crystal display, [see "Liquid Crystal Handbook", edited by Nippon Gakujutu Shinkokai, No.142 Committee, published by Nikkan Kogyo Shimbunsha, 1989, p.531], the liquid crystal display cell may be obtained through a series of steps including washing of the substrate, formation of the transparent conductive layer, fine patterning of the transparent conductive layer (coating of resist, development, etching, washing-away of resist), formation of an orientation film, rubbing treatment, washing, printing of a sealant, bonding of the substrates, heating and pressurization, vacuum deaeration, introduction of the liquid crystal, sealing of the introduction opening, cutting of the liquid crystal cell, fitting of the polarizing film and light-reflecting plates, and so forth. In these liquid crystal display production steps, the production conditions should be set in consideration of the various characteristics of the liquid crystal display substrate employing the plastic optical article, such as heat resistance, mechanical characteristics, etc.

The present invention is explained hereunder in more detail with respect to the following examples.

The various characteristics of the transparent resin were measured in the following manner.

### (a) Total light transmittance, yellowing

Measured using an SM computer, product of Suga

Shikenki, K.K.

### (b) Haze

Measured using a fully-automated direct-reading haze computer meter HGM-2DP, product of Suga Shikenki, K.K.

### (c) Solvent resistance

The surface was rubbed with acetone-impregnated gauze, and the change in luster at that time was visually evaluated.

### (d) Glass transition temperature

Measured using a Mettler DSC30. The glass transition temperature was data processed according to JIS K-7121, and a second run Tmg was used.

The optical article provided with each of the cured films was measured in the following manner.

### (a) Transparency

The transparency was examined visually under a fluorescent lamp.

### (b) Abrasion resistance

The surface was rubbed with steel wool #0000 and the degree of scratching was evaluated.

### (c) Adhesion

One hundred squares were formed in the surface of the film with a steel knife, reaching 1 mm deep into the substrate, and cellophane adhesive tape ("Cello-Tape", trade name of Nichiban K.K.) was strongly bonded thereto, after which the tape was rapidly peeled in the perpendicular direction and any peeling of the coating was noted.

### (d) Film thickness

Measured with an SE-3300 surface roughness tester, product of Kosaka Kenkyusho, K.K.

### (e) Heat resistance

A sample was placed on a glass plate and heated at 150° for 2 hours, after which the surface condition (smoothness, etc.) was examined.

### (f) Mechanical properties

A bending test at room temperature was conducted according to JIS K-7203. A bending test at 170°C was conducted to measure the flexural modulus at 170°C under a condition in which the distance between the support points was 10 mm and the bending rate was 0.5 mm/min, using a TOM universal tester (product of Shinko Tsushin, K.K.).

### (g) Yellowing

The plastic optical article was placed on a white sheet of paper, and the degree of yellowing was examined visually.

### (h) Gas barrier properties

The oxygen permeability coefficient was determined by the constant pressure coulometric method, using an OX-TRAN 2/20 MH, product of Mocon Co.

The optical articles provided with the metal oxide and/or metal nitride films were measured in the following manner.

### (a) Appearance

Examined visually.

### (b) Adhesion

One hundred squares were formed in the surface of the film with a steel knife, reaching 1 mm deep into the substrate, and cellophane adhesive tape ("Cello-Tape", trade name of Nichiban K.K.) was strongly bonded thereto, after which the tape was rapidly peeled in the perpendicular direction and any peeling of the coating was noted.

### (c) Film thickness

Measured with an SE-3300 surface roughness tester, product of Kosaka Kenkyusho, K.K.

### (d) Heat resistance

The appearance of the plastic optical article was examined visually after heating for 2 hours in an oven set to 180°C and then cooling to room temperature.

### (e) Chemical resistance

The plastic optical article was immersed for 5 minutes in a 3% aqueous solution of sodium hydroxide at 40°C, and then washed for 5 minutes with flowing water, after which the solution was replaced with purified water, the water was drained with gauze and the appearance was examined visually.

### (f) Gas barrier properties

The oxygen permeability coefficient was determined by the constant pressure coulometric method, using an OX-TRAN 2/20 MH, product of Mocon Co.

The optical articles provided with the transparent conductive layer were measured in the following manner.

### (a) Appearance

Examined visually.

### (b) Surface resistance

Measured at room temperature using a Loresta MCP-TESTER-FP (product of Mitsubishi Yuka, K.K.)

### (c) Adhesion

One hundred squares were formed in the surface of the film with a steel knife, reaching 1 mm deep into the substrate, and cellophane adhesive tape ("Cello-Tape", trade name of Nichiban K.K.) was strongly bonded thereto, after which the tape was rapidly peeled in the perpendicular direction and any peeling of the coating was noted.

### (d) Film thickness

Measured with an SE-3300 surface roughness tester, product of Kosaka Kenkyusho, K.K.

### (e) Heat resistance

The appearance of the plastic optical article or the plastic optical article coated with the transparent conductive layer was examined visually after heating for 2 hours in an oven set to 180°C and then cooling to room temperature.

### (f) Chemical resistance

The plastic optical article was immersed for 5 minutes in a 3% aqueous solution of sodium hydroxide at 40°C, and then washed for 5 minutes with flowing water, after which the solution was replaced with purified water, the water was drained with gauze and the appearance was examined visually.

### (g) Gas barrier properties

The oxygen permeability coefficient was determined by the constant pressure coulometric method, using an OX-TRAN 2/20 MH, product of Mocon Co.

### Example 1

### (1) Preparation of transparent resin

| | |
|---|---|
| isopropylmaleimide | 26.5 g |
| styrene | 18.5 g |
| divinyl benzene | 5.0 g |
| azobisisobutyronitrile | 0.05 g |

The compounds listed above were mixed and dissolved, and then cast-molded by casting polymerization. The casting polymerization was carried out as follows.

The outer peripheral sections of two glass plates each having a dimension of 150 mm × 150 mm and a thickness of 5 mm were bonded by soft vinyl chloride gaskets and the glass plates were assembled in such a manner as to place a distance of 0.5 mm between them. The monomer mixture described above was poured into the glass plate assembly and polymerized at 70°C for 8 hours, 100° for 1 hour and 150°C for 1 hour, to obtain a transparent cast-molded plate with a crosslinked structure (hereunder referred to as "cast plate (I)".

The glass transition temperature of this cast plate (I) was 180°C, the total light transmittance was 90%. The flexural modulus was 398 kg/mm² and the flexural strength was 9 kg/mm² at room temperature, while the solvent resistance was satisfactory.

### (2) Formation of cured film composed mainly of hydrophilic resin and organosilicon compound

### (a) Preparation of coating composition (A)

95.3 g of γ-glycidoxypropyltrimethoxysilane was poured into a reactor equipped with a stirrer, and 21.8 g of a 0.01 N aqueous hydrochloric acid solution was gradually added dropwise while keeping the liquid temperature at 10°C and stirring the liquid with a magnetic stirrer. After the drop addition was completed, cooling was stopped to obtain a hydrolysate of γ-glycidoxypropyltrimethoxysilane.

To 10 g of this hydrolysate were added, after weighing out into a beaker 180 g of a 50 wt% aqueous solution of polyvinyl alcohol (average polymerization degree: 600, saponification degree: 91.0-94.0 mol%), 260 g of water, 50 g of 1,4-dioxane, 0.5 g of a silicone-based surfactant and 5 g of aluminum acetylacetonate while stirring, and the mixture was further adequately stirred to obtain coating composition (A).

### (b) Application and curing

The cast plate (I) obtained in (1) above was immersed in an aqueous solution of caustic soda, after which coating composition (A) was used for dip coating at a lifting rate of 20 cm/min, prior to precuring at 90°C for 5 minutes and further heating at 140°C for 2 hours, to form a cured layer on the cast plate (I). The resulting cast plate with the cured layer composed mainly of a hydrophilic resin and an organosilicon compound is hereunder referred to as "cast plate (II)".

### (3) Cured layer containing inorganic fine particles

### (a) Preparation of coating composition (B)

To the 117.3 g of the γ-glycidoxypropyltrimethoxysilane hydrolysate prepared according to (2)-(a) were added 216 g of methanol, 216 g of dimethylformamide, 0.5 g of a silicon-based surfactant and 67.5 g of a bisphenol-A type epoxy resin ("Epicoat 827", product of Yuka-Shell Epoxy K.K.). The mixture was stirred and 270 g of a colloidal silica sol ("OSCAL-1132", product of Shokubai Kasei Kogyo, K.K., average particle size: 13 nm) and 13.5 g of aluminum acetylacetonate were added with adequate stirring to obtain the coating composition (B).

### (b) Production of plastic optical article

The cast plate (II) obtained in (2) above was dip coated in the coating composition (B) prepared in (3) above at a lifting rate of 20 cm/min, prior to precuring at 100°C for 10 minutes and further heating at 110°C for 4 hours, to form a transparent cured layer on the cast plate (II). The resulting cast plate with the cured layer containing inorganic fine particles is hereunder referred to as "cast plate (III)".

### (4) Formation of transparent conductive layer

A transparent conductive layer composed mainly of ITO was formed to a film thickness of about 2000 angstroms on one surface of the cast plate (III) obtained in (3) above, by DC magnetron sputtering under the following conditions.

| Sputtering conditions | |
|---|---|
| Target material | ITO (SnO₂, 10 wt%) |
| Sputter introduction gas | Ar and O₂ |
| Degree of vacuum | 2.0 × 10⁻³ Torr |
| Making current | 1.5 kw |
| Substrate temperature | 120°C |
| Sputtering rate | 100 angstrom/min |

The room temperature surface resistance of the side of the optical article on which the ITO film was formed was 22 ohms/□. After being heated at 150°C for 1.5 hours, the transparent plate provided with this ITO film was cooled to room temperature, and the surface resistance was again measured and found to be 22 ohms/□, or the same as the initial value. Furthermore, no changes were observed in the appearance, thus confirming that the transparent plate had excellent heat resistance. In addition, the oxygen permeability coefficient of the obtained optical article was 0.01 cc/m²·day·atm, thus indicating a very excellent gas barrier property. Also, when the optical article was used to prepare a simple matrix liquid crystal display according to the method described on p.531 of "Liquid Crystal Handbook" (edited by Nippon Gakujutu Shinkokai, No.142 Committee, published by Nikkan Kogyo Shimbunsha, 1989), which is a publicly known method for producing simple matrix liquid crystal displays, through a series of steps including fine patterning of the transparent conductive layer (coating of resist, development, etching, washing-away of resist), formation of an orientation film, rubbing treatment, washing, printing of a sealant, bonding of the substrates, heating and pressurization, vacuum deaeration, introduction of the liquid crystal, sealing of the introduction opening, cutting of the liquid crystal cell, fitting of the polarizing film and light-reflecting plates, etc., absolutely no generation of air bubbles was observed at normal temperature and pressure. Furthermore, the resulting simple matrix liquid crystal display was capable of displaying sharply visible dots.

### Example 2

All of the procedures in Example 1 were followed, except that (2)-(a) was replaced with the following step. (2) Formation of cured layer composed mainly of hydrophilic resin and organosilicon compound

### (a) Preparation of coating composition (A)

95.3 g of γ-glycidoxypropyltrimethoxysilane was poured into a reactor equipped with a stirrer, and 21.8 g of a 0.01 N aqueous hydrochloric acid solution was gradually added dropwise while keeping the liquid temperature at 10°C and stirring the liquid with a magnetic stirrer. After the drop addition was completed, cooling was stopped to obtain a hydrolysate of γ-glycidoxypropyltrimethoxysilane.

To 5 g of this hydrolysate were added, after weighing out into a beaker 90 g of a 50 wt% aqueous solution of polyvinyl alcohol (average polymerization degree: 600, saponification degree: 91.0-94.0 mol%), 260 g of water, 50 g of 1,4-dioxane, 0.5 g of a silicone-based surfactant and 5 g of aluminum acetylacetonate while stirring, 166.7 g of a colloidal silica sol ("OSCAL-1132", product of Shokubai Kasei Kogyo, K.K., average particle size: 13 nm) and 5 g of aluminum acetylacetonate were added with adequate stirring to obtain the coating composition (A).

The appearance of the cured layer composed mainly of a hydrophilic resin and an inorganic silicon compound obtained in Example 2 was as uniform and transparent as the cured layer obtained in Example 1. The room temperature surface resistance of the side of the optical article obtained in Example 2 was 22 ohms/□. After being heated at 150°C for 1.5 hours, the transparent plate provided with this ITO film was cooled to room temperature, and the surface resistance was again measured and found to be 22 ohms/□, or the same as the initial value. Furthermore, no changes were observed in the appearance, thus confirming that the transparent plate had excellent heat resistance. In addition, the oxygen permeability coefficient of the obtained optical article was 0.01 cc/m²·day·atm, thus indicating a very excellent gas barrier property. Also, when the optical article was used to prepare a simple matrix liquid crystal display in the same manner as in Example 1, absolutely no generation of air bubbles was observed at normal temperature and pressure. Furthermore, the resulting simple matrix liquid crystal display was capable of displaying sharply visible dots.

### Example 3

All of the procedures in Example 1 were followed, except that (2)-(a) was replaced with the following step.

### (2) Formation of cured layer composed mainly of hydrophilic resin and organosilicon compound

### (a) Preparation of coating composition (A)

100 g of γ-glycidoxypropylmethyldiethoxysilane was poured into a reactor equipped with a stirrer, and 14.5 g of a 0.01 N aqueous hydrochloric acid solution was gradually added dropwise while keeping the liquid temperature at 10°C and stirring the liquid with a magnetic stirrer. After the drop addition was completed, cooling was stopped to obtain a hydrolysate of γ-glycidoxypropylmethyldiethoxysilane.

To 5 g of this hydrolysate were added, after weighing out into a beaker 90 g of a 50 wt% aqueous solution of polyvinyl alcohol (average polymerization degree: 600, saponification degree: 91.0-94.0 mol%), 260 g of water, 50 g of 1,4-dioxane and 0.5 g of a silicone-based surfactant while stirring, after which 166.7 g of a colloidal silica sol ("OSCAL-1132", product of Shokubai Kasei Kogyo, K.K., average particle size: 13 nm) and 5 g of aluminum acetylacetonate were added with adequate stirring to obtain the coating composition (A).

The appearance of the cured layer composed mainly of a hydrophilic resin and an inorganic silicon compound obtained in Example 3 was as uniform and transparent as the cured layer obtained in Example 1. The room temperature surface resistance of the side of the optical article obtained in Example 3 was 22 ohms/□. After being heated at 150°C for 1.5 hours, the transparent plate provided with this ITO film was cooled to room temperature, and the surface resistance was again measured and found to be 22 ohms/□, or the same as the initial value. Furthermore, no changes were observed in the appearance, thus confirming that the transparent plate had excellent heat resistance. In addition, the oxygen permeability coefficient of the obtained optical article was 0.007 cc/m²·day·atm, thus indicating a very excellent gas barrier property. Also, when the optical article was used to prepare a simple matrix liquid crystal display in the same manner as in Example 1, absolutely no generation of air bubbles was observed at normal temperature and pressure. Furthermore, the resulting simple matrix liquid crystal display was capable of displaying sharply visible dots.

### Example 4

The same procedure as in Example 1 was followed, except that steps (4) and onward were replaced with the following.

### (4) Formation of metal oxide layer

A SiO₂ layer was formed to a film thickness of about 600 angstroms on one surface of the cast plate (III) obtained in (3) above, by RF discharge sputtering under the following conditions.

| Sputtering conditions | |
|---|---|
| Target material | SiO₂ |
| Sputter introduction gas | Ar |
| Degree of vacuum | 3.5 × 10⁻³ Torr |
| Making current | 1.5 kw |
| Substrate temperature | 120°C |
| Sputtering rate | 50 angstrom/min |

The resulting plastic optical article is hereunder referred to as "cast plate (IV)".

### (5) Formation of transparent conductive layer

A transparent conductive layer composed mainly of ITO was formed to a film thickness of about 2000 angstroms on the surface of the SiO₂ film on the cast plate (IV) obtained in (4) above, by DC magnetron sputtering under the following conditions.

| Sputtering conditions | |
|---|---|
| Target material | ITO (SnO₂, 10 wt%) |
| Sputter introduction gas | Ar and O₂ |
| Degree of vacuum | 2.0 × 10⁻³ Torr |
| Making current | 1.5 kw |
| Substrate temperature | 120°C |
| Sputtering rate | 100 angstrom/min |

The room temperature surface resistance of the side of the optical article obtained in Example 4 on which the ITO film was formed was 22 ohms/□. After being heated at 150°C for 1.5 hours, the transparent plate provided with this ITO film was cooled to room temperature, and the surface resistance was again measured and found to be 22 ohms/□, or the same as the initial value. Furthermore, no changes were observed in the appearance, thus confirming that the transparent plate had excellent heat resistance. In addition, the oxygen permeability coefficient of the obtained optical article was 0.01 cc/m²·day·atm, thus indicating a very excellent gas barrier property. Also, when the optical article was used to prepare a simple matrix liquid crystal display in the same manner as in Example 1, absolutely no generation of air bubbles was observed at normal temperature and pressure. Furthermore, the resulting simple matrix liquid crystal display was capable of displaying sharply visible dots.

### Example 5

The same procedure as in Example 1 was followed, except that steps (4) and onward were replaced with the following.

### (4) Formation of metal nitride layer

A Si metal layer was formed to a film thickness of about 100 angstroms on one surface of the cast plate (III) obtained in (4) above, by DC magnetron sputtering under the following conditions.

| Sputtering conditions | |
|---|---|
| Target material | Si |
| Sputter introduction gas | N₂ |
| Degree of vacuum | 1.0 × 10⁻³ Torr |
| Making current | 0.3 kw |
| Substrate temperature | 120°C |
| Sputtering rate | 10 angstrom/min |

The resulting plastic optical article is hereunder referred to as "cast plate (V)".

### (5) Formation of metal oxide layer

A metal oxide layer of SiO₂ was formed to a film thickness of about 600 angstroms on one surface of the metal nitride layer of the cast plate (V) obtained in (4) above, by DC magnetron sputtering under the following conditions.

| Sputtering conditions | |
|---|---|
| Target material: | Si |
| Sputter introduction gas: | Ar and O₂ |
| Degree of vacuum: | 3.5 × 10⁻³ Torr |
| Making current: | 1.5 kw |
| Substrate temperature: | 120°C |
| Sputtering rate: | 50 angstrom/min |

The resulting plastic optical article is hereunder referred to as "cast plate (VI)".

### (6) Formation of transparent conductive layer

A transparent conductive layer composed mainly of ITO was formed to a film thickness of about 2000 angstroms on the surface of the SiO₂ film on the cast plate (VI) obtained in (4) above, by DC magnetron sputtering under the following conditions.

| Sputtering conditions | |
|---|---|
| Target material | ITO (SnO₂, 10 wt%) |
| Sputter introduction gas | Ar and O₂ |
| Degree of vacuum | 2.0 × 10⁻³ Torr |
| Making current | 1.5 kw |
| Substrate temperature | 120°C |
| Sputtering rate | 100 angstrom/min |

The room temperature surface resistance of the side of the optical article obtained in Example 5 on which the ITO film was formed was 22 ohms/□. After being heated at 150°C for 1.5 hours, the transparent plate provided with this ITO film was cooled to room temperature, and the surface resistance was again measured and found to be 22 ohms/□, or the same as the initial value. Furthermore, no changes were observed in the appearance, thus confirming that the transparent plate had excellent heat resistance. In addition, the oxygen permeability coefficient of the obtained optical article was 0.01 cc/m²·day·atm, thus indicating a very excellent gas barrier property. Also, when the optical article was used to prepare a simple matrix liquid crystal display in the same manner as in Example 1, absolutely no generation of air bubbles was observed at normal temperature and pressure. Furthermore, the resulting simple matrix liquid crystal display was capable of displaying sharply visible dots.

### Example 6

The same procedures as in Example 5 were followed, except that (2)-(a) was replaced with the following step.

### (2) Formation of cured layer composed mainly of hydrophilic resin and organosilicon compound

### (a) Preparation of coating composition (A)

100 g of γ-glycidoxypropylmethyldiethoxysilane was poured into a reactor equipped with a stirrer, and 14.5 g of a 0.01 N aqueous hydrochloric acid solution was gradually added dropwise while keeping the liquid temperature at 10°C and stirring the liquid with a magnetic stirrer. After the drop addition was completed, cooling was stopped to obtain a hydrolysate of γ-glycidoxypropylmethyldiethoxysilane.

To 5 g of this hydrolysate were added, after weighing out into a beaker 90 g of a 50 wt% aqueous solution of polyvinyl alcohol (average polymerization degree: 600, saponification degree: 91.0-94.0 mol%), 260 g of water, 50 g of 1,4-dioxane and 0.5 g of a silicone-based surfactant while stirring, after which 166.7 g of a colloidal silica sol ("OSCAL-1132", product of Shokubai Kasei Kogyo, K.K., average particle size: 13 nm) and 5 g of aluminum acetylacetonate were added with adequate stirring to obtain the coating composition (A).

The appearance of the cured layer composed mainly of a hydrophilic resin and an inorganic silicon compound obtained in Example 6 was as uniform and transparent as the cured layer obtained in Example 1. The room temperature surface resistance of the side of the optical article obtained in Example 6 was 22 ohms/□. After being heated at 150°C for 1.5 hours, the transparent plate provided with this ITO film was cooled to room temperature, and the surface resistance was again measured and found to be 22 ohms/□, or the same as the initial value. Furthermore, no changes were observed in the appearance, thus confirming that the transparent plate had excellent heat resistance. In addition, the oxygen permeability coefficient of the obtained optical article was 0.007 cc/m²·day·atm, thus indicating a very excellent gas barrier property. Also, when the optical article was used to prepare a simple matrix liquid crystal display in the same manner as in Example 1, absolutely no generation of air bubbles was observed at normal temperature and pressure. Furthermore, the resulting simple matrix liquid crystal display was capable of displaying sharply visible dots.

### Example 7

The same procedures as in Example 4 were followed, except that (2)-(b) and (4) were replaced with the following steps.

### (2) Formation of cured layer composed mainly of hydrophilic resin and organosilicon compound

### (b) Application and curing

The cast plate (I) obtained in (1) above was immersed in an aqueous solution of caustic soda, after which 5 g of coating composition (A) was used for spin coating at a rotation speed of 1500 rpm for 60 seconds, prior to precuring at 90°C for 5 minutes and further heating at 140°C for 2 hours, to form a cured layer on the cast plate (I). The resulting cast plate with the cured layer composed mainly of the hydrophilic resin and the organosilicon compound is hereunder referred to as "cast plate (II)".

### (4) Formation of metal oxide layer

A SiO₂ layer was formed to a film thickness of about 600 angstroms on the surface of the cast plate (III) obtained in (3) above provided with the cured layer composed mainly of the hydrophilic resin and organosilicon compound on the transparent resin layer, by RF discharge sputtering under the following conditions.

| Sputtering conditions | |
|---|---|
| Target material | SiO₂ |
| Sputter introduction gas | Ar |
| Degree of vacuum | 3.5 × 10⁻³ Torr |
| Making current | 1.5 kw |
| Substrate temperature | 120°C |
| Sputtering rate | 50 angstrom/min |

The resulting plastic optical article is hereunder referred to as "cast plate (IV)".

The appearance of the cured layer composed mainly of the hydrophilic resin and the inorganic silicon compound obtained in Example 7 was as uniform and transparent as the cured layer obtained in Example 1. The room temperature surface resistance of the side of the optical article obtained in Example 7 was 22 ohms/□. After being heated at 150°C for 1.5 hours, the transparent plate provided with this ITO film was cooled to room temperature, and the surface resistance was again measured and found to be 22 ohms/□, or the same as the initial value. Furthermore, no changes were observed in the appearance, thus confirming that the transparent plate had excellent heat resistance. In addition, the oxygen permeability coefficient of the obtained optical article was 0.01 cc/m²·day·atm, thus indicating a very excellent gas barrier property. Also, when the optical article was used to prepare a simple matrix liquid crystal display in the same manner as in Example 1, absolutely no generation of air bubbles was observed at normal temperature and pressure. Furthermore, the resulting simple matrix liquid crystal display was capable of displaying sharply visible dots.

### Example 8

The same procedures as in Example 7 were followed, except that (4) was replaced with the following step.

### (4) Formation of metal oxide layer

A SiO₂ layer was formed to a film thickness of about 600 angstroms on the surface of the cast plate (III) obtained in (3) above provided with the cured layer composed mainly of the hydrophilic resin and organosilicon compound on the transparent resin layer, by RF discharge sputtering under the following conditions.

| Sputtering conditions | |
|---|---|
| Target material | SiO₂ |
| Sputter introduction gas | Ar |
| Degree of vacuum | 3.5 × 10⁻³ Torr |
| Making current | 1.5 kw |
| Substrate temperature | 120°C |
| Sputtering rate | 50 angstrom/min |

The resulting plastic optical article is hereunder referred to as "cast plate (IV)".

The room temperature surface resistance of the side of the optical article obtained in Example 8 was 22 ohms/□. After being heated at 150°C for 1.5 hours, the transparent plate provided with this ITO film was cooled to room temperature, and the surface resistance was again measured and found to be 22 ohms/□, or the same as the initial value. Furthermore, no changes were observed in the appearance, thus confirming that the transparent plate had excellent heat resistance. In addition, the oxygen permeability coefficient of the obtained optical article was 0.01 cc/m²·day·atm, thus indicating a very excellent gas barrier property. Also, when the optical article was used to prepare a simple matrix liquid crystal display in the same manner as in Example 1, absolutely no generation of air bubbles was observed at normal temperature and pressure. Furthermore, the resulting simple matrix liquid crystal display was capable of displaying sharply visible dots.

### Example 9

The same procedure as in Example 1 was followed, except that (2)-(a) in Example 4 was replaced with the following step.

### (2) Formation of layer B2

### (a) Preparation of coating composition (A)

52.25 g of a DMSO (dimethylsulfoxide) solution containing polyacrylonitrile (weight average molecular weight: 130,000) (concentration: 24.5%), 64 g of a colloidal silica sol (average particle size: 45 nm, 30% N-methylpyrrolidone solution, Shokubai Kasei Kogyo, K.K.), 683.75 g of DMSO and 0.64 g of a fluorine-based surfactant were measured out and thoroughly stirred and mixed to prepare coating composition (A).

The room temperature surface resistance of the side of the optical article obtained in Example 9 was 22 ohms/□. After being heated at 180°C for one hour, the transparent plate provided with this ITO film was cooled to room temperature, and the surface resistance was again measured and found to be 22 ohms/□, or the same as the initial value. Furthermore, no changes were observed in the appearance, thus confirming that the transparent plate had excellent heat resistance. In addition, the oxygen permeability coefficient of the obtained optical article was 0.5 cc/m²·day·atm, thus indicating a very excellent gas barrier property. Also, when the optical article was used to prepare a simple matrix liquid crystal display in the same manner as in Example 1, absolutely no generation of air bubbles was observed at normal temperature and pressure. Furthermore, the resulting simple matrix liquid crystal display was capable of displaying sharply visible dots.

### Example 10

The same procedure as in Example 1 was followed, except that (2)-(a) in Example 4 was replaced with the following step.

### (2) Formation of layer B2

### (a) Preparation of coating composition (A)

An aqueous polyvinylidene chloride resin latex solution (DO-818, trade name of Kureha Kagaku Kogyo) was used.

The room temperature surface resistance of the side of the optical article obtained in Example 9 was 22 ohms/□. After being heated at 180°C for one hour, the transparent plate provided with this ITO film was cooled to room temperature, and the surface resistance was again measured and found to be 22 ohms/□, or the same as the initial value. Furthermore, no changes were observed in the appearance, thus confirming that the transparent plate had excellent heat resistance. In addition, the oxygen permeability coefficient of the obtained optical article was 0.05 cc/m²·day·atm, thus indicating a very excellent gas barrier property. Also, when the optical article was used to prepare a simple matrix liquid crystal display in the same manner as in Example 1, absolutely no generation of air bubbles was observed at normal temperature and pressure. Furthermore, the resulting simple matrix liquid crystal display was capable of displaying sharply visible dots.

### Example 11

The same procedure as in Example 1 was followed, except that (2)-(a) in Example 4 was replaced with the following step.

### (2) Formation of layer B2

### (a) Preparation of coating composition (A)

200 g of a polyvinylidene chloride resin (SARAN RESIN F216, trade name of Asahi Kasei Kogyo), 800 g of NMP (N-methylpyrrolidone) and 1.04 g of a fluorine-based surfactant were measured out and thoroughly stirred and mixed to prepare coating composition (A).

The room temperature surface resistance of the side of the optical article obtained in Example 9 was 22 ohms/□. After being heated at 180°C for one hour, the transparent plate provided with this ITO film was cooled to room temperature, and the surface resistance was again measured and found to be 22 ohms/□, or the same as the initial value. Furthermore, no changes were observed in the appearance, thus confirming that the transparent plate had excellent heat resistance. In addition, the oxygen permeability coefficient of the obtained optical article was 0.05 cc/m²·day·atm, thus indicating a very excellent gas barrier property. Also, when the optical article was used to prepare a simple matrix liquid crystal display in the same manner as in Example 1, absolutely no generation of air bubbles was observed at normal temperature and pressure. Furthermore, the resulting simple matrix liquid crystal display was capable of displaying sharply visible dots.

### Example 12

### (1) Preparation of transparent resin

A cast plate (I) comprising a transparent resin was prepared in the same manner as in Example 1 (1).

### (2) Formation of layer B2

### (a) Preparation of coating composition (A)

52.25 g of a DMSO (dimethylsulfoxide) solution containing polyacrylonitrile (weight average molecular weight: 130,000) (concentration: 24.5%), 64 g of a colloidal silica sol (average particle size: 45 nm, 30% N-methylpyrrolidone solution, Shokubai Kasei Kogyo, K.K.), 683.75 g of DMSO and 0.64 g of a fluorine-based surfactant were measured out and thoroughly stirred and mixed to prepare coating composition (A).

### (b) Application and drying

The cast plate (I) obtained in (1) above was immersed in an aqueous solution of sodium hydroxide and then dip coated in the coating composition (A) at a lifting rate of 10 cm/min, prior to precuring at 90°C for 5 minutes and further heating at 160°C for 30 minutes, to form a film of layer B2 on the cast plate (I). The resulting cast plate is hereunder referred to as "cast plate (II)".

### (3) Formation of metal oxide layer

A SiO₂ layer was formed to a film thickness of 600 angstroms on one surface of the cast plate (II) obtained in (2) above, by RF discharge sputtering. The film-forming conditions were the same as listed in Example 4 (4).

The resulting plastic optical article is hereunder referred to as "cast plate (III)".

### (4) Formation of transparent conductive layer

A transparent conductive layer composed mainly of ITO was formed to a film thickness of 2000 angstroms on the surface of the SiO₂ film on the cast plate (III) obtained in (3) above, by DC magnetron sputtering. The film-forming conditions were the same as listed in Example 4 (5).

The room temperature surface resistance of the side of the optical article obtained in Example 12 was 22 ohms/□. After being heated at 180°C for one hour, the transparent plate provided with this ITO film was cooled to room temperature, and the surface resistance was again measured and found to be 22 ohms/□, or the same as the initial value. Furthermore, no changes were observed in the appearance, thus confirming that the transparent plate had excellent heat resistance. In addition, the oxygen permeability coefficient of the obtained optical article was 0.5 cc/m²·day·atm, thus indicating a very excellent gas barrier property. Also, when the optical article was used to prepare a simple matrix liquid crystal display in the same manner as in Example 1, absolutely no generation of air bubbles was observed at normal temperature and pressure. Furthermore, the resulting simple matrix liquid crystal display was capable of displaying sharply visible dots.

### Comparative Example 1

A cast plate (I) obtained in the same manner as in Example 1 was dip coated in coating composition (B) prepared in the same manner as in Example 1 at a lifting rate of 20 cm/min, prior to precuring at 100°C for 10 minutes and further heating at 110°C for 4 hours, to form a cured layer containing inorganic fine particles directly on the cast plate (I). The steps from (4) onward in Example 1 were carried out to obtain an optical article without a cured film composed mainly of a hydrophilic resin and organosilicon compound. The room temperature surface resistance of the optical article obtained in Comparative Example 1 was 22 ohms/□. After being heated at 150°C for 1.5 hours, the transparent plate provided with this ITO film was cooled to room temperature, and the surface resistance was again measured and found to be 22 ohms/□, or the same as the initial value. Furthermore, no changes were observed in the appearance, thus confirming that the transparent plate had excellent heat resistance. However, the oxygen permeability coefficient of the obtained optical article was 80 cc/m²·day·atm, thus indicating an inferior gas barrier property compared to the optical articles obtained in Examples 1 to 8. Furthermore, when the optical article was used to prepare a simple matrix liquid crystal display in the same manner as in Example 1, generation of air bubbles was observed at normal temperature and pressure immediately after its preparation, and its functions as a liquid crystal display were unsatisfactory.

### Industrial Applicability

According to the present invention, there are provided plastic optical articles with excellent gas barrier properties, conductivity, durability, heat resistance, abrasion resistance, transparency and chemical resistance.

## Claims

1. A plastic optical article having the following layers A, B, F and D, in which each layer comprises one or more layers:
A. A transparent resin
B. The following gas barrier type layer B1 or B2:
B1. A cured gas barrier layer composed mainly of a hydrophilic resin and an organosilicon compound.
B2. A cured gas barrier layer composed mainly of a polymer with an oxygen permeability coefficient of 1 x 10⁻¹³ cm³·cm/cm²·sec·Pa or less, and a water vapor permeability coefficient of 1 x 10⁻¹⁰ cm³·cm/cm²·sec·Pa or less
F. The following inorganic layers C and/or E
C. A transparent electro-conductive layer
E. A metal oxide and/or metal nitride layer
D. A cured layer containing inorganic fine particles.

2. A plastic optical article according to claim 1 having the layers A, B, C, D and E, in which each layer comprises one or more layers.

3. A plastic optical article according to claim 2, wherein the layers A, B, C, D and E are laminated in the order D-A-B-D-E-C, D-B-A-D-E-C or D-B-A-B-D-E-C.

4. A plastic optical article according to any one of claims 1 to 3, wherein the cured gas barrier layer B1 composed mainly of a hydrophilic resin and an organosilicon compound is composed mainly of a polyvinyl alcohol as the hydrophilic resin, an organosilicon compound represented by the following general formula (A) and an aluminium chelate compound represented by the following general formula (B).
General formula (A) R¹ ₐR² _{b}SiX_{4-a-b}
where R¹ is an organic group of 1-10 carbon atoms, R² is a hydrocarbon or halogenated hydrocarbon group of 1-6 arbon atoms, X is a hydrolyzing group and a and b are 0 or 1.
General formula (B) AlXₙY₃₋ₙ
where X is OL with L representing a lower alkyl group; Y is at least one member selected from the ligands derived from the compounds represented by the general formulas (C)
M¹COCH₂COM²
wherein each of M¹ and M² is a lower alkyl group, and (D)
M³COCH₂COOM⁴
wherein each of M³ and M⁴ is a lower alkyl group; and n is 0, 1 or 2.

5. A plastic optical article according to claim 4, wherein the organosilicon compound is a compound represented by the following general formula (E).
General formula (E) R³R⁴SiX₂
where R³ and R⁴ are organic groups of 1-10 carbon atoms and X is a hydrolyzing group.

6. A plastic optical article according to any one of claims 1 to 3, wherein the cured gas barrier layer B2 composed mainly of a polymer with an oxygen permeability coefficient of 1 x 10⁻¹³ cm³·cm/cm²·sec.Pa or less and a water vapor permeability coefficient of 1 x 10⁻¹⁰ cm³·cm/cm²·sec.Pa or less, is composed mainly of a polyvinylnitrile resin and/or polyhalogenated vinylidene.

7. A plastic optical article according to claim 6 in which the cured gas barrier layer B2 is composed mainly of polyvinylidene chloride.

8. A plastic optical article according to any one of claims 1 to 7, in which the cured gas barrier layer contains fine particulate silica with an average particle size of 1-200 nm.

9. A plastic optical article according to any one of claims 1 to 8, wherein the transparent resin A has a glass transition temperature of 160°C or higher.

10. A plastic optical article according to any one of claims 1 to 8, wherein the transparent resin A is a crosslinked resin.

11. A plastic optical article according to any one of claims 1 to 8, wherein the transparent resin A is a resin prepared by 20 to 98 wt% copolymerization of a maleimide type monomer.

12. A plastic optical article according to any one of claims 1 to 11, wherein the transparent electro-conductive layer C has a thickness of 150 to 5000 angstroms.

13. A plastic optical article according to any one of claims 1 to 12, wherein the metal oxide layer and/or metal nitride layer E has a thickness of 50 to 2000 angstroms.

14. A plastic optical article according to any one of claims 1 to 13, wherein the metal oxide layer and/or metal nitride layer E comprises an oxide and/or nitride of a metal selected from Si, Al and Ti.

15. A plastic optical article according to any one of claims 1 to 14, wherein the cured layer D containing inorganic fine particles is a siloxane type cured layer containing fine particles with an average particle size of 1 to 200 nm, of at least one type selected from silica, antimony oxide, titania, alumina, zirconia and tungsten oxide.

16. A method for producing a plastic optical article as claimed in claim 1 wherein the cured gas barrier layer is formed by applying a paint prepared by dissolving in a solvent the layer components for a cured gas barrier layer composed mainly of a hydrophilic resin and an organosilicon compound, **characterized in that** a cyclic ether compound is included in the solvent.

## Patentansprüche

1. Optischer Kunststoffgegenstand mit den folgenden Schichten A, B, F und D, wobei jede Schicht eine oder mehrere Schichten umfaßt:
A. ein transparentes Harz
B. folgende Schicht vom Gassperr-Typ B1 oder B2:
B1. eine gehärtete Gassperrschicht, die hauptsächlich aus einem hydrophilen Harz und einer Organosiliciumverbindung besteht,
B2. eine gehärtete Gassperrschicht, die hauptsächlich aus einem Polymer mit einem Permeabilitätskoeffizienten für Sauerstoff von 1 x 10⁻¹³ cm³ · cm/cm² · s · Pa oder weniger und einem Permeabilitätskoeffizienten für Wasserdampf von 1 x 10⁻¹⁰ cm³ · cm/cm² · s · Pa oder weniger besteht,
F. die folgenden anorganischen Schichten C und/oder E,
C. eine transparente, elektrisch leitende Schicht,
E. eine Schicht aus einem Metalloxid und/oder Metallnitrid,
D. eine gehärtete Schicht, die feine anorganische Partikel enthält.

2. Optischer Kunststoffgegenstand nach Anspruch 1 mit den Schichten A, B, C, D und E, wobei jede Schicht eine odere mehrere Schichten aufweist.

3. Optischer Kunststoffgegenstand nach Anspruch 2, wobei die Schichten A, B, C, D und E in der Reihenfolge D-A-B-D-E-C, D-B-A-D-E-C oder D-B-A-B-D-E-C laminiert sind.

4. Optischer Kunststoffgegenstand nach einem der Ansprüche 1 bis 3, wobei die gehärtete Gassperrschicht B1, die hauptsächlich aus einem hydrophilen Harz und einer Organosiliciumverbindung besteht, hauptsächlich aus einem Polyvinylalkohol als das hydrophile Harz, einer Organosiliciumverbindung mit der folgenden allgemeinen Formel (A) und einer Aluminium-Chelatverbindung mit der folgenden allgemeinen Formel (B) besteht:
allgemeine Formel (A) R¹ ₐR² _{b}SiX_{4-a-b}
worin R¹ ein organischer Rest mit 1 bis 10 Kohlenstoffatomen ist, R² ein Kohlenwasserstoff- oder halogenierter Kohlenwasserstoffrest mit 1 bis 6 Kohlenstoffatomen ist, X eine hydrolysierende Gruppe ist und a und b 0 oder 1 sind,
allgemeine Formel (B) AlXₙY₃₋ₙ
worin X OL ist, wobei L ein Niederalkylrest ist;
Y mindestens ein Bestandteil ist, der aus Liganden ausgewählt ist, die von Verbindungen mit den allgemeinen Formeln (C):
M¹COCH₂COOM²
worin M¹ und M² jewils ein Niederalkylrest sind,
und (D):
M³COCH₂COM⁴
worin M³ und M⁴ jewils ein Niederalkylrest sind,
abgeleitet sind;
und n 0, 1 oder 2 ist.

5. Optischer Kunststoffgegenstand nach Anspruch 4, wobei die Organosiliciumverbindung eine Verbindung ist, die mit der folgenden allgemeinen Formel (E) angegeben wird:
allgemeine Formel (E) R³R⁴SiX₂
worin R³ und R⁴ organische Reste mit 1 bis 10 Kohlenstoffatomen sind und X eine hydrolysierende Gruppe ist.

6. Optischer Kunststoffgegenstand nach einem der Ansprüche 1 bis 3, wobei die gehärtete Gassperrschicht B2, die hauptsächlich aus einem polaren Polymer mit einem Permeabilitätskoeffizienten für Sauerstoff von 1 x 10⁻¹³ cm³ · cm/cm² · s · Pa oder weniger und einem Permeabilitätskoeffizienten für Wasserdampf von 1 x 10⁻¹⁰ cm³ · cm/cm² · s · Pa oder weniger besteht, hauptsächlich aus einem Polyninylnitrilharz und/oder polyhalogeniertem Vinyliden besteht

7. Optischer Kunststoffgegenstand nach Anspruch 6, wobei die gehärtete Gassperrschicht B2 hauptsächlich aus Polyvinylidenchlorid besteht.

8. Optischer Kunststoffgegenstand nach einem der Ansprüche 1 bis 7, wobei die gehärtete Gassperrschicht feines partikelförmiges Siliciumdioxid mit einer mittleren Partikelgröße von 1 bis 200 nm enthält.

9. Optischer Kunststoffgegenstand nach einem der Ansprüche 1 bis 8, wobei das transparente Harz A einen Glasumwandlungspunkt von 160°C oder darüber aufweist

10. Optischer Kunststoffgegenstand nach einem der Ansprüche 1 bis 8, wobei das transparente Harz A ein vernetztes Harz ist.

11. Optischer Kunststoffgegenstand nach einem der Ansprüche 1 bis 8, wobei das transparente Harz A ein Harz ist, das hergestellt worden ist, indem 20 bis 98 Gew.-% eines Monomers vom Maleimid-Typ copolymerisiert wurden.

12. Optischer Kunststoffgegenstand nach einem der Ansprüche 1 bis 11, wobei die transparente, elektrisch leitende Schicht C eine Dicke von 150 bis 5000 Angström aufweist.

13. Optischer Kunststoffgegenstand nach einem der Ansprüche 1 bis 12, wobei die Schicht E aus einem Metalloxid und/oder Metallnitrid eine Dicke von 50 bis 2000 Angström aufweist.

14. Optischer Kunststoffgegenstand nach einem der Ansprüche 1 bis 13, wobei die Schicht E aus einem Metalloxid und/oder Metallnitrid ein Oxid und/oder Nitrid eines Metalls umfaßt, das aus Si, Al und Ti ausgewählt ist.

15. Optischer Kunststoffgegenstand nach einem der Ansprüche 1 bis 14, wobei die gehärtete Schicht D, die feine anorganische Partikel enthält, eine gehärtete Schicht von Siloxan-Typ ist, die feine Partikel mit einer mittleren Partikelgröße von 1 bis 200 nm von mindestens einem Typ enthält, der aus Siliciumdioxid, Antimonoxid, Titanoxid, Aluminiumoxid, Zirconiumdioxid und Wolframoxid ausgewählt ist.

16. Verfahren zur Herstellung eines optischen Kunststoffgegenstandes nach Anspruch 1, wobei die gehärtete Gassperrschicht erzeugt wird, indem ein Anstrich aufgebracht wird, der durch Auflösen der Schichtbestandteile für eine gehärtete Gassperrschicht, die hauptsächlich aus einem hydrophilen Harz und einer Organosiliciumverbindung besteht, in einem Lösungsmittel erzeugt wird, **dadurch gekennzeichnet, daß** im Lösungsmittel eine cyclische Etherverbindung enthalten ist.

## Revendications

1. Article optique en plastique ayant les couches suivantes A, B, F et D, dans lequel article chaque couche comprend une ou plusieurs couches :
A. Une résine transparente
B. La couche suivante B1 ou B2 formant barrière contre les gaz :
B1. Une couche durcie formant barrière contre les gaz, composée principalement d'une résine hydrophile et d'un composé d'organosilicium.
B2. Une couche durcie formant barrière contre les gaz, composée principalement d'un polymère doté d'un coefficient de perméabilité à l'oxygène de 1 x 10⁻¹³ cm³ • cm/cm² • sec • Pa ou moins et d'un coefficient de perméabilité à la vapeur d'eau de 1 x 10⁻¹⁰ cm³ • cm/cm² • sec • Pa ou moins.
F. Les couches inorganiques suivantes C et/ou E
C. Une couche électro-conductrice transparente
E. Une couche d'oxyde métallique et/ou de nitrure métallique
D. Une couche durcie comprenant de fines particules inorganiques.

2. Article optique en plastique selon la revendication 1, ayant les couches A, B, C, D et E, dans lequel article chaque couche comprend une ou plusieurs couches.

3. Article optique en plastique selon la revendication 2, dans lequel les couches A, B, C, D et E sont laminées dans l'ordre D-A-B-D-E-C, D-B-A-D-E-C ou D-B-A-B-D-E-C.

4. Article optique en plastique selon l'une quelconque des revendications 1 à 3, dans lequel la couche durcie formant barrière contre les gaz B1, principalement composée d'une résine hydrophile et d'un composé d'organosilicium, comprend essentiellement un alcool polyvinylique sous forme de résine hydrophile, un composé d'organosilicium représenté par la formule générale suivante (A) et un composé de chélate d'aluminium représenté par la formule générale suivante (B).
Formule générale (A) R¹ ₐR² _{b}SiX_{4-a-b}
dans laquelle R¹ est un groupe organique ayant de 1 à 10 atomes de carbone, R² est un groupe hydrocarbure ou un groupe halon ayant de 1 à 6 atomes de carbone, X est un groupe d'hydrolyse et a et b sont 0 ou 1.
Formule générale (B) AlXₙY₃₋ₙ
dans laquelle X est OL, L représentant un groupe alkyle inférieur ; Y est au moins un membre choisi parmi les ligands provenant des composés représentés par les formules générales (C)
M¹COCH₂COM²
dans laquelle chacun de M¹ et M² est un groupe alkyle inférieur, et (D)
M³COCH₂COOM⁴
dans laquelle chacun de M³ et M⁴ est un groupe alkyle inférieur ; et n est 0, 1 ou 2.

5. Article optique en plastique selon la revendication 4, dans lequel le composé d'organosilicium est un composé représenté par la formule générale suivante (E).
Formule générale (E) R³R⁴SiX₂
dans laquelle R³ et R⁴ sont des groupes organiques ayant de 1 à 10 atomes de carbone et X est un groupe d'hydrolyse.

6. Article optique en plastique selon l'une quelconque des revendications 1 à 3, dans lequel la couche durcie formant barrière contre les gaz B2, composée principalement d'un polymère ayant un coefficient de perméabilité à l'oxygène de 1 x 10⁻¹³ cm³ • cm/cm² • sec • Pa ou moins et un coefficient de perméabilité à la vapeur d'eau de 1 x 10⁻¹⁰cm³ • cm/cm² • sec • Pa ou moins, comprend essentiellement une résine de nitrile polyvinylique et/ou un vinylidène polyhalogéné.

7. Article optique en plastique selon la revendication 6, dans lequel la couche durcie formant barrière contre les gaz B2 est composée principalement de chlorure de polyvinylidène.

8. Article optique en plastique selon l'une quelconque des revendications 1 à 7, dans lequel la couche durcie formant barrière contre les gaz comprend une fine farine de quartz ayant une taille moyenne des particules comprise entre 1 et 200 nm.

9. Article optique en plastique selon l'une quelconque des revendications 1 à 8, dans lequel la résine transparente A présente une température de transition vitreuse de 160 °C ou plus.

10. Article optique en plastique selon l'une quelconque des revendications 1 à 8, dans lequel la résine transparente A est une résine réticulée.

11. Article optique en plastique selon l'une quelconque des revendications 1 à 8, dans lequel la résine transparente A est une résine préparée par une copolymérisation de 20 à 98 % en poids d'un monomère de type maléimide.

12. Article optique en plastique selon l'une quelconque des revendications 1 à 11, dans lequel la couche électro-conductrice transparente C présente une épaisseur comprise entre 150 et 5000 angströms.

13. Article optique en plastique selon l'une quelconque des revendications 1 à 12, dans lequel la couche d'oxyde métallique et/ou la couche de nitrure métallique E présente une épaisseur comprise entre 50 et 2000 angströms.

14. Article optique en plastique selon l'une quelconque des revendications 1 à 13, dans lequel la couche d'oxyde métallique et/ou la couche de nitrure métallique E comprend un oxyde et/ou un nitrure d'un métal choisi parmi Si, Al et Ti.

15. Article optique en plastique selon l'une quelconque des revendications 1 à 14, dans lequel la couche durcie D comprenant de fines particules inorganiques est une couche durcie de type siloxane comprenant de fines particules ayant une taille moyenne des particules comprise entre 1 et 200 nm, d'au moins un type choisi parmi la silice, l'oxyde d'antimoine, l'oxyde de titane, l'alumine, la zircone et l'oxyde de tungstène.

16. Procédé de production d'un article optique en plastique tel qu'il est décrit dans la revendication 1, dans lequel la couche durcie formant barrière contre les gaz est formée en appliquant une peinture préparée en dissolvant les composants de la couche dans un solvant, afin d'obtenir une couche durcie formant barrière contre les gaz composée principalement d'une résine hydrophile et d'un composé d'organosilicium, **caractérisé par le fait qu'**un composé d'éther cyclique est compris dans le solvant.
